(19) **Europäisches Patentamt**
**European Patent Office**
**Office européen des brevets**

(11) **EP 4 405 716 B1**

(12) **EUROPEAN PATENT SPECIFICATION**

(45) Date of publication and mention
of the grant of the patent:
**04.03.2026 Bulletin 2026/10**

(21) Application number: **22758401.8**

(22) Date of filing: **02.08.2022**

(51) International Patent Classification (IPC):
**G01S 17/86** *(2020.01)*    **G01S 17/89** *(2020.01)*
**G01S 17/32** *(2020.01)*    **G01S 7/481** *(2006.01)*

(52) Cooperative Patent Classification (CPC):
**G01S 17/89; G01S 7/4815; G01S 7/4816;**
**G01S 17/32; G01S 17/86**

(86) International application number:
**PCT/US2022/074421**

(87) International publication number:
**WO 2023/049547 (30.03.2023 Gazette 2023/13)**

(54) **APPARATUS AND METHOD FOR LIGHT-BASED RANGE ESTIMATION**

VORRICHTUNG UND VERFAHREN ZUR LICHTBASIERTEN ENTFERNUNGSSCHÄTZUNG

APPAREIL ET PROCÉDÉ D'ESTIMATION DE PORTÉE BASÉE SUR LA LUMIÈRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.09.2021 US 202117482156**

(43) Date of publication of application:
**31.07.2024 Bulletin 2024/31**

(73) Proprietor: **QUALCOMM INCORPORATED**
**San Diego, California 92121-1714 (US)**

(72) Inventors:
• **GUM, Arnold, Jason**
**San Diego, California 92121-1714 (US)**

• **SLOBODYANYUK, Volodimir**
**San Diego, California 92121-1714 (US)**
• **GILMORE, Robert**
**San Diego, California 92121-1714 (US)**

(74) Representative: **Reddie & Grose LLP**
**The White Chapel Building**
**10 Whitechapel High Street**
**London E1 8QS (GB)**

(56) References cited:
DE-A1- 102018 205 386    US-A1- 2015 304 534
US-A1- 2018 267 663    US-A1- 2019 310 370
US-A1- 2020 284 881    US-B1- 8 629 975

**EP 4 405 716 B1**

**Description**

BACKGROUND

Field of Disclosure

Aspects of the disclosure relate to ranging and distance estimation. More specifically, the technology discussed relates to use of code sequences in time-of-flight range estimation.

Description of Related Art

Time-of-flight range estimation is an effective tool for performing precise distance measurements to a target. For example, Light Detection and Ranging, or LIDAR (referred to below as "lidar"), utilizes time-of-flight information to obtain range estimates. By sending a pulse of laser light toward the target, receiving a reflection of the light, and measuring the elapsed time between transmission of the original signal and receipt of the reflection, an accurate estimate of the distance to the target can be obtained. Traditionally, the emitter and receiver equipment used in lidar technology has been expensive and bulky. Newer generations of emitters and receivers hold the potential to improve the efficiency and cost associated with lidar measurements. However, such newer equipment does not resolve, and in fact can exacerbate, certain issues associated with lidar measurement. These issues may include, for example, sensitivity in ambient light, light pollution from competing lidar systems, eye safety, power control, etc. Improvements in lidar technology to can provide benefits and broaden use cases in time-of-flight range estimation. Various light-based embodiments may be utilized.

United States Patent Application Publication US 2019/0310370 A1 relates to an optoelectronic sensor a and method for detection and distance determination of objects. The sensor has a light transmitter for transmitting a transmission light beam with a modulated pulse sequence coding, a light receiver for generating a reception signal from the remitted light beam, and a control evaluation unit which is configured to determine a light time of flight based on the reception signal and the associated pulse sequence coding and, therefrom, a distance value. United States Patent Application Publication US 2020/0284881 A1 describes a range estimation system that uses coded light transmission schemes, for example using amplitude modulation. This allows contributions to a received optical signal to be separated in the time-domain using a correlation-based technique, even where they overlap in time.

BRIEF SUMMARY

The scope of protection is defined by the scope of the appended claims. Any examples which do not fall within the scope of the claims are not presented as embodiments but as examples which are helpful for understanding the invention.

BRIEF DESCRIPTION OF THE DRAWINGS

Aspects of the disclosure are illustrated by way of example. In the accompanying figures, like reference numbers indicate similar elements.

According to various aspects of the present disclosure, lidar transmissions are encoded with known codes to spread the transmission over time, wavelength, space, or a combination thereof.

FIG. 1 presents a time-of-flight range estimation system based on a two-dimensional array of light sources, according an aspect of the disclosure.

FIG. 2A shows one design of a mobile device configured for time-of-flight range estimation, according to an aspect of the disclosure.

FIG. 2B shows another design of a mobile device configured for time-of-flight range estimation, according to an aspect of the disclosure.

FIG. 3 is a block diagram of a time-of-flight range estimation system, according to an aspect of the disclosure

FIG. 4 illustrates a comparison of (1) a conventional pulse light transmission and (2) a coded light transmission distributing signal energy over time, according to an aspect of the disclosure.

FIG. 5 illustrates a comparison of (1) a conventional pulse light transmission and (2) a coded light transmission distributing signal energy over time and multiple wavelengths, according to an aspect of the disclosure.

FIG. 6 is a flowchart of an example process 600 associated with coded time-of-flight range estimation.

FIG. 7 is a block diagram of various hardware and software components of a user equipment device, according to an aspect of the disclosure.

DETAILED DESCRIPTION

Several illustrative embodiments will now be described with respect to the accompanying drawings, which form a part hereof. While particular embodiments, in which one or more aspects of the disclosure may be implemented, are described below, other embodiments may be used and various modifications may be made without departing from the scope of the appended claims.

According to some aspects of the disclosure, a code sequence may be used in the transmission and reception of signals for time-of-flight range estimation. A known code sequence may be employed to modulate light generated from one or more light sources, to generate a coded light transmission. Different modulation techniques may be used. For example, light generated by the one or more light sources may be amplitude modulated (e.g., switched ON or OFF according to 1s and 0s in the code sequence, or switched to different levels). As another example, light generated by the one or more light sources may be wavelength modulated (e.g., switched to different wavelengths). The coded light transmission may be sent toward a target. The coded light transmission reflects off of a surface of the target and returns as a reflected signal. The reflected signal may be received and correlated with the known code sequence, to generate time-of-flight information. The time-of-flight information is indicative round-trip time - i.e., the amount of time elapsed from a time at which the coded light transmission is sent to a time at which the reflected signal is received. The range estimate may then be computed based on the speed of the light transmission through the medium (e.g., speed of light through air) and the round-trip time.

Use of such a code sequence in the transmission and reception of signals for time-of-flight range estimation, according to aspects of the disclosure, has distinct advantages. In particular, modulation with the code sequence allows the energy of the transmission signal to be distributed over time, different wavelengths of light, space, or a combination of the above. The instantaneous magnitude of the transmission signal at any particular time, wavelength range, and/or position in space can thus be dramatically reduced. This allows the intensity of light to be reduced yet still provide accurate range estimation, improving safety and opening up use cases and applications that might not otherwise be possible. For example, for safety reasons, government and/or health regulations may place strict limits on the power of light emissions that may come into contact with individuals and, in particular, with the human eye. By using a coded light transmission, according to aspects of the disclosure, precise range estimates can be obtained while utilizing relatively low intensity light emissions.

According to aspects of the disclosure, time-of-flight information may be recovered even though the instantaneous magnitude of the transmission signal is reduced. By correlating the reflected signal with the know code sequence, the energy of the reflected version of the transmission signal can be efficiently accumulated. Thus, a transmission signal and a reflected signal that may appear to be "in the noise floor" can still be utilized to extract time-of-flight information. In fact, correlating the reflected signal with the known code sequence can produce a relative delay associated with a correlation peak that directly corresponds to the time-of-flight information. The time-of-flight information, generated based on the relative delay, can then be used to compute the range estimate.

Range estimates obtained based on a code sequence in the transmission and reception of signals for time-of-flight range estimation can have wide uses. Just as an example, a three-dimensional (3D) point cloud can be constructed using range estimates generated via use of the coded light transmissions. Such a 3D point cloud can be used in diverse applications such as driver-assistance or autonomous driving systems for vehicles, to generate a 3D map of a scene. Over shorter distances, such a 3D point cloud can be used to generate a 3D contour surface of a user's face, e.g., for face identification in a mobile phone. As another example, auto focus and/or auto depth-of-field adjustments for cameras, which are based on distances to targets, can be implemented using range estimates generated by the coded light transmissions. The above are merely examples, and an exhaustive list of use cases and applications is not provided here. Nevertheless, the improved safety and efficacy associated with coded light transmissions according to aspects of the disclosure undoubtedly open up the possibility of adoption in many scenarios. More detailed descriptions of various aspects of the disclosure are provided below.

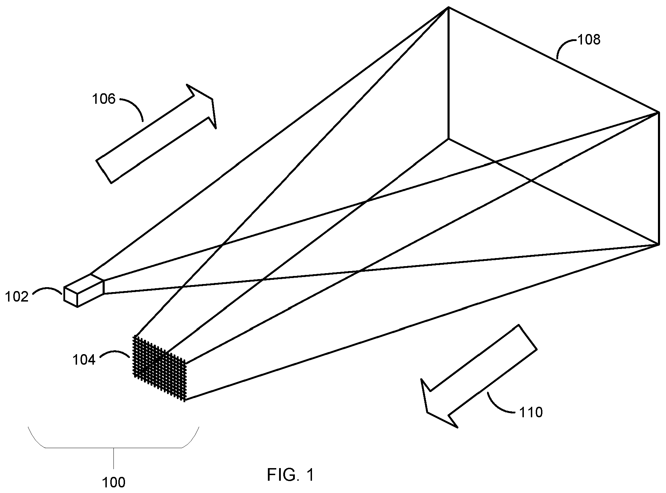

FIG. 1 presents a time-of-flight range estimation system 100 based on coded light transmissions, according an aspect of the disclosure. The system 100 comprises one or more transmitters 102 and one or more receivers 104. In the example shown in this figure, the one or more transmitters 102 comprise a two-dimensional array of emitters, such as a two-dimensional array of light emitting diodes (LEDs) or a two-dimensional array of vertical-cavity surface-emitting lasers (VCSELs). Here, the emitters are positioned as adjacent light sources in a two-dimensional array. In other examples, the emitters may be positioned as non-adjacent light sources. Also, the one or more transmitters 102 may comprise a one-dimensional array of light sources, instead of a two-dimensional array of light sources, to generate one or more coded light transmissions. In yet other embodiments, the one or more transmitters 102 may comprise a single light source to generate one or more coded light transmissions.

Two or more of the light sources in the transmitters 102 may emit light in a parallel direction. Typically, each light source emits light having a light beam shape. The light beam shape may have a center axis originating at the light source and pointed outwardly toward a field of view or a target. The light beam shape may have, for example, a conical shape characterized by a beam angle that corresponds to the rate of expansion of the size of the beam shape with increasing distance away from the light source. The beam angle can vary depending on the type of light source used. For example, a laser such as a VCSEL used as the light source may correspond to a relatively narrow beam angle. By contrast, a light source such as an LED may correspond to a relatively wide beam angle. Even though two or more of the light sources in the transmitters 102 may emit light in a parallel direction, their respective light beam shapes may have positive, non-zero beam angles, such that the beam shapes overlap each other along the path toward the field of view or target. In other embodiments, two or more of the light sources in the transmitters 102 may emit light in non-parallel directions. For example, the center axes of two or more of the light beam shapes of light emitted by the light sources in the transmitters 102 may point at different parts of the field of view, target, and/or set of targets.

In the example shown in this figure, the one or more receivers 104 comprise a two-dimensional array of sensors, such as a two-dimensional array of p-i-n (PIN) photodiodes in a complementary metal-oxide semiconductor (CMOS) image sensor device or a two-dimensional array of single-photon avalanche diodes (SPADs). Here, the sensors of the one or more receivers 104 are positioned as adjacent sensors in a two-dimensional array. In other examples, the sensors may be positioned as non-adjacent sensors. Also, the one or more receivers 104 may comprise a one-dimensional array of sensors, to receive one or more reflected signals resulting from one or more coded light transmissions. In yet other embodiments, the one or more receivers 104 may comprise a single sensor to receive one or more reflected signals resulting from one or more coded light transmissions.

The one or more transmitters 102 send one or more coded light transmissions along a forward path 106 toward a target 108. The one or more coded light transmissions may be generated at the system 100 using at least one code sequence. The target 108 may be, for example, a scene in front of a vehicle, an object such as a user's face in front of a mobile phone, etc. In this figure, the target 108 is shown as a flat plane. However, it should be understood that the target 108 may have three-dimensional contours, e.g., a surface that has points at different distances away from the system 100. The one or more coded light transmissions reach and reflect off of the surface of the target 108. The reflected signal(s) travel along a return path 110 back toward the system 100. Sensor(s) at the one or more receivers 104 receive the reflected signal(s) and convert the photons of light into measurable signal(s) such as voltages and/or currents.

The system 100 utilizes knowledge of the at least one coded sequence to correlate against the reflected signal(s) and extract roundtrip delay information for time-of-flight range estimation. The system 100 takes advantage of the fact that it serves as both the transmitter of the coded light transmission(s) and the receiver of the reflected, coded light transmission(s). Specifically, the system 100 can encode the one or more coded light transmissions using at least one code sequence and use the same at least one coded sequence to correlate against the reflected signal(s). By correlating the reflected signal(s) using the at least one code sequence, which is known at the system 100, the system 100 can generate the code phase difference between (1) the code sequence within a coded light transmission on the transmit side and (2) the same code sequence within a reflected signal on the receive side. Such a code phase difference can directly translate to a roundtrip delay, which may then be used to compute a range estimate between the system 100 and the target 108 (or a particular point on the target 108) based on the speed of light through the applicable signal transmission medium (e.g., air). By doing so, the system 100 is able to generate precise range estimates and do so while spreading the energy (and reduce the intensity) of the one or more coded light transmissions.

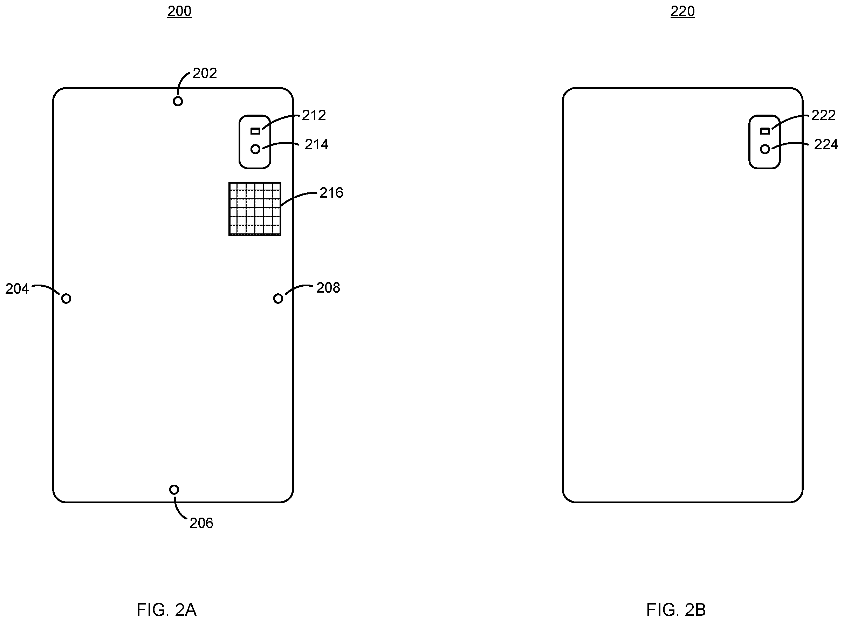

FIG. 2A shows one design of a mobile device 200 configured for time-of-flight range estimation, according to an aspect of the disclosure. While a mobile device is shown in this and other figures, aspects of time-of-flight range described herein may be implemented in mobile devices as well as stationary devices. Such stationary device may include, for example, roadside units (RSUs) positioned along roads, highways, intersections, etc., industrial and/or home sensing devices, including Internet-of-Things (IoT) devices, voice-based assistance devices, appliances, etc. Just as one example, a sensing device located in a home might comprise a security alarm device incorporating a motion sensor utilizing time-of-flight range estimation as described herein. Returning to FIG. 2, the mobile device 200 comprises a plurality of light sources, including non-adjacent light sources 202, 204, 206, and 208. The mobile device 200 also comprises a single additional light source 212. The light sources, including the non-adjacent light sources 202, 204, 206, and 208 and the single light source 212, may comprise different kinds of light emitters, including light emitting diodes (LEDs), vertical-cavity surface-emitting lasers (VCSELs), or other types of light emitters. As shown, the mobile device 200 also comprises a CMOS image sensor 214 as well as an array of single-photon avalanche diodes (SPADs) 216. The single light source 212 and the CMOS image sensor 214 may operate as part of an illumination and photo capture system (e.g., a rear-facing camera pointed away from the user) for mobile device 200. For instance, the single light source 212 may be used as a flash for illuminating a scene when the CMOS image sensor 214 operates to capture an image of the scene.

The selection of components such as light sources may be made based on various performance parameters and/or application needs. One such parameter is the resolution of range estimation, which can impact requirements on light source switching speed. Just as an example, if a particular application scenario requires a range resolution of 5 millimeters (mm), a minimum light source switching speed may be specified to be 60 kHz, based on the computation of: $(3*10^8 \text{ meters/second})*(5*10^{-3}m)^{-1} = 0.6*10^5 \text{ Hz} = 60 \text{ kHz}$. One or more LEDs meeting such switching speed requirements may be selected as the light sources, e.g., non-adjacent light sources 202, 204, 206, and 208 and/or the single light source 212, incorporated in the design of the mobile device 200 and used in in performing range estimation. Generally speaking, LEDs that emit light in the visible spectrum tend to have larger junction areas and higher capacitance, which can tend to reduce switching speed. Nevertheless, visible light LEDs may be driven up to approximately 1 MHz in some designs. It is also possible to drive certain LEDs to even higher switching speeds, such as up to 96 MHz. Thus, range estimation with relatively high resolution may be achieved using commercially available LEDs. In some instances, monochromatic LEDs may be chosen for even faster switching speeds.

Any combination of different light sources, including the non-adjacent light sources 202, 204, 206, and 208 and/or the single light source 212 may serve as one or more light emitters for coded time-of-flight range estimation, according to embodiments of the disclosure. In some embodiments of the disclosure, the non-adjacent light sources 202, 204, 206, and 208 are used to generate the coded light transmissions. In other embodiments, the single light source 212 is used to generate the coded light transmissions. In further embodiments, the non-adjacent light sources 202, 204, 206, and 208 and the single light source 212 are used together to generate the coded light transmissions.

Two or more of the light sources, such as the non-adjacent light sources 202, 204, 206, and 208 and/or the single light source 212, may emit light in a parallel direction. Typically, each light source emits light having a light beam shape. The light beam shape may have a center axis originating at the light source and pointed outwardly toward a field of view of a target. The light beam shape may have, for example, a conical shape characterized by a beam angle that corresponds to the rate of expansion of the size of the beam shape with increasing distance away from the light source. The beam angle can vary depending on the type of light source used. For example, a laser such as a VCSEL used as the light source may correspond to a relatively narrow beam angle. In some embodiments, the beam angle of the light sources is sufficiently narrow as to allow the coded light transmission and reflected, coded light transmission to remain nonoverlapping with respect to one another. Thus, each beam of reflected, coded light transmission within an array may be separately received with little or no interference from adjacent beams of reflected, coded light transmission. Alternatively or additionally, orthogonal code sequences may be used for adjacent beams of coded light transmission in an array, such that the beams can be separated (e.g., by employing different correlators), even if the beams overlap one another. For example, a light source such as an LED may correspond to a relatively wide beam angle. Even though two or more of the non-adjacent light sources 202, 204, 206, and 208 and/or single light source 212 may emit light in a parallel direction, their respective light beam shapes may have positive, non-zero beam angles, such that the beam shapes overlap each other along the path toward the field of view or target. In other embodiments, two or more of the non-adjacent light sources 202, 204, 206, and 208 and/or single light source 212 may emit light in non-parallel directions. For example, the center axes of two or more of the light beam shapes of light emitted by the non-adjacent light sources 202, 204, 206, and 208 and/or single light source 212 may point at different parts of the field of view, target, and/or set of targets.

The manner in which light sources are used to generate coded light transmissions can vary depending on implementation. Just as an example, different light sources can separately generate coded light transmissions. For instance, different light sources, including one or more of the non-adjacent light sources 202, 204, 206, and 208 and the single light source 212, can each generate a coded light transmission based on a different code sequence. According to some embodiments, these code sequences are orthogonal to one another. Here, orthogonal code sequences may be characterized as code sequences that, when correlated against one another, produce a zero or near zero correlation value. Alternatively or additionally, different light sources can cooperatively generate a single coded light transmission. For instance, a particular code sequence may be applied across the different light sources such that they produce transmissions that together form a coded light transmission. Furthermore, a code sequence may be encoded as an amplitude-based code over time, or as a wavelength-based code over time, or as a combination thereof, in one or more coded light transmissions.

In some embodiments, different light sources, including one or more of the non-adjacent light sources 202, 204, 206, and 208 and the single light source 212, are configured to emit light of different wavelengths. The different light sources may be implemented as VCSELs, LEDs, and/or other types of light sources. The different light sources may emit light in various parts of the visible or invisible spectrum. Just as an example, different wavelengths of infrared (IR) light may be used. For instance, the non-adjacent light sources 202, 204, 206, and 208 may emit infrared (IR) light having wavelengths of 890 nm, 905 nm, 940 nm, and 988 nm, respectively. As discussed, the non-adjacent light sources 202, 204, 206, and 208 can each generate a coded light transmission based on a different code sequence. According some embodiments, coded light transmissions provide protection against potentially harmful light exposure by reducing the intensity of light that would otherwise be used for range estimation. For example, IR and near IR light can raise the internal temperature of the eye and can cause damage to eye structures such as the lens, cornea, and retina. By using a code sequence to distribute the energy of a transmission signal, the intensity of the resulting coded transmission signal can be significantly reduced. Thus, mobile device 200 can operate using transmissions such as IR light with little or no risk of eye injury.

Different colors of light emitted by the different light sources, including one or more of the non-adjacent light sources 202, 204, 206, and 208 and the single light source 212, may be used to combat light interference. In some embodiments, coded light transmissions are sent using different colors (and correlation of the received reflected light also performed across different colors) to mitigate the effects of light pollution. An example of such light pollution may be ambient indoor lighting, which may have a narrow range of visible wavelengths (i.e., color). If only one color of light is used as the transmitted light for range estimation, and the chosen color overlaps with the color of the ambient indoor lighting, the results of the correlation of the received reflected light may be significantly impacted by the presence of the ambient indoor lighting. By employing coded light transmission across different colors, the chances of such light interference can be greatly reduced. In some embodiments, the light transmissions are realized by activating light sources of different colors, based on the selected code. On the receive side, the reflected light may be correlated against the same coded light transmission across different colors, to generate a range estimate. In some embodiments, the specific colors of the coded light transmissions can be dynamically selected to avoid colors present in the environment, to reduce interference. For example, ambient light sensors capable of detecting light of specific wavelengths or wavelength ranges can be used to identify particular colors of light present in the environment. In response, the colors of the coded light transmissions can be dynamically selected so as to avoid colors already existing as "noise," thereby significantly improving the signal-to-noise ratio of the received reflected coded light transmissions. Alternatively or additionally, the colors of the coded light transmissions can also be dynamically selected based on (1) signal-to-noise ratio and/or (2) magnitude of correlation (resulting from correlating the received, reflected signal using the known code sequence at various code phase delays) associated with reception of the reflected light. One or more colors that yield the highest signal-to-noise ratio(s) and/or highest correlation value(s) may be selected as the colors used for coded light transmissions. The process of selecting colors for coded light transmission may be repeated performed, so as to adjust to changing light interference conditions.

According to some embodiments, light sensors such as the one or more of the non-adjacent light sources 202, 204, 206, and 208 and/or the single light source 212 may be used to both illuminate a scene for image capture and provide light transmissions for light-based range estimation. In some embodiments, light sources used for scene illumination may emit white light, while light sources used for range estimation may emit coded, colored light (e.g., red light) that can be correlated upon receipt to generate range estimates. Such white light may be generated by emitting different colors of light from different light sources (e.g., color LEDs) that, when combined, results in white light. Thus, differently colored LEDs or other light sources may be combined to generate white light for scene illumination but also pulsed separately or additively to generate coded light transmissions for light-based range estimation.

In some embodiments, a monochromatic LED or other light source may as the sole light source. In certain instances, a monochromatic light source might have a shorter response time and flash at a higher frequency. The monochromatic light source can be chosen to avoid interference in a particular environment. For example, a red LED may be used as a light emitter. In such an example, the receiver may be configured to receive the particular color (e.g., red) of light based on wavelength filter, to reduce the effects of light interference which can include light of other wavelengths.

Any combination of different sensors, including the CMOS image sensor 214 and/or the array of SPADs 216, may serve as one or more sensor for receiving reflected light for coded time-of-flight range estimation, according to embodiments of the disclosure. In some embodiments of the disclosure, the array of SPADs 216 used as sensors to receive the reflected, coded light transmissions. In other embodiments, the CMOS image sensor 214 is used to receive the reflected, coded light transmissions. In further embodiments, the array of SPADs 216 and the CMOS image sensor 214 are used together to receive the reflected, coded light transmissions.

According to some embodiments of the disclosure, range estimation can be performed for different parts of a field of view (FOV) using coded light transmissions. An array of sensors can be used for receiving reflected, coded light transmissions representative of different portions of the field of view. For example, an array of sensors such as those in an CMOS image sensor 214 and/or an array of SPADs 216 can be used. According to some embodiments, a coded light transmission is projected with a sufficiently wide beam angle to cover an entire FOV. The coded light transmission reflects off of various surfaces within the FOV. Thus, the reflected light resulting from the coded light transmission returns from different portions of the FOV. An array of sensors, such as the CMOS image sensor 214 and/or the array of SPADs 216, can capture the reflected light from the different portions of the FOV. In some embodiments, the sensors in the array of sensors (e.g., the CMOS image sensor 214 and/or the array of SPADs 216) are divided into groups. Each group of sensor(s) captures the light reflected from a corresponding portion of the FOV and provides the basis for a range estimate for that portion of the FOV. In this manner, different range estimates can be obtained for different portions of the FOV.

In some embodiments, the field of view may be partitioned using, for example, a grid pattern. Range estimation may be performed for each portion (e.g., a square area) of the grid pattern. For example, the sensors in the array may be divided into groups based on a grid having M columns and N rows, M and N each being a positive integer. Each group of sensors comprises the sensors within a square area corresponding to a particular column and particular row. Correspondingly, the FOV is also divided into M x N portions. The FOV may be coarsely divided or finely divided, depending on implementation. If only a few range estimates are needed for the entire FOV, the FOV may be coarsely divided. Just as an example, in one implementation, M = 2 and N = 2, which results in dividing the array of sensors into four groups. Coarsely dividing the FOV allows each group to contain a greater number of sensors, which can improve signal strength and shorten the window needed for correlating the received reflected signal against the known code. Range estimation based on a coarse division of the FOV may be used, for example, to provide an auto-focus operation for a digital camera. A range estimate may be obtained for each portion of the FOV, based on reception of reflected coded light transmissions as captured by each corresponding group of sensors. In the M = 2 and N = 2 example described above, the FOV is divided into four portions corresponding to four groups of sensors within the sensor array. If a large number of range estimates are needed for the FOV, the FOV may be finely divided. Here, the array of sensors is divided into a large number of groups and the FOV is divided into a large number of corresponding portions. Again, the sensors in each group capture reflected, coded light transmissions from a corresponding portion of the FOV. Finely dividing the FOV provides more range estimates for the FOV and a higher depth map resolution. However, because each group of sensors contains fewer sensors, the signal strength is reduced, and the window for correlating the received reflected signal against the known code may be lengthened. Range estimation based on a fine division of the FOV may be used, for example, to generate a "point cloud" or three-dimensional surface characterizing the environment in the FOV.

In other embodiments, each partition of the field of view is sampled by a single light sensor. For example, such a light sensor may be positioned to sample light from the center of the corresponding partition of the field of view.

Performing range estimation for different parts of the field of view may have many applications. The examples provided below are illustrative in nature and do not represent an exhaustive list of applications. In some embodiments, an autofocus feature may be implemented using coded time-of-flight range estimates performed for different parts of the point of view. For example, a set of focus points (e.g., 9 points, 12 point, 25 points, 51 points, etc.) distributed over the field of view. A coded time-of-flight range estimate may be obtained for each focus point, and autofocus operations may be performed to adjust the focal length of a camera of the mobile device 200 based on the range value obtained for one, some, or all of the focus points. Additionally or alternatively, a depth-of-field (DoF) adjustment for a camera of the mobile device 200 can be adjusted based on differences or span of ranges, between coded time-of-flight range estimates for different portions of the field of view. For example, one measure of such differences or span of ranges may be the difference between the largest range estimate value and the smallest range estimate value among the focus points in the field of view. Additionally or alternatively, foreground and background differentiation may be implemented. Objects appearing in the field of view may be grouped by range estimates. For example, objects corresponding to a common range estimate, span of range estimates, or range estimates over a threshold value may labeled as "background" objects. Objects corresponding to range estimates smaller than the range estimate(s) associated with the background may be labeled as "foreground" objects. Image capture and/or processing techniques may then be based on the distinction between background and foreground objects. For example, autofocus or depth of field operations may only be based on focus points associated with foreground objects, as opposed to focus points associated with background objects. In some embodiments, range-finding operations such as autofocus or depth of field may only be based on one or more focus points selected from a center portion of an image. For example, autofocus or depth of field operations may be based on a range estimate computed based on a median time-of-flight value for an area defined at or near the center of the image sensor.

Furthermore, range-finding operations such as autofocus or depth-of-field operations may be based on a combination of traditional optical approaches and/or light-based range estimation discussed herein. Traditional optical approaches may include, for example, coincidence telemeters such as split-image, inverted-image, or double-image telemeters, as well as stereoscopic range finders, etc. According to some embodiments, when there is sufficient ambient light to carry out one or more traditional optical approaches for range-finding, a system that incorporates embodiments of the present disclosure may (1) switch over to rely on the traditional optical approach(es) instead of light-based range estimation using coded light transmission or (2) use traditional optical approach(es) for initial range estimation but also utilize light-based range estimation using coded light transmission to verify range estimates obtained from traditional approach(es).

According to some embodiments of the disclosure, different coded light transmissions may be used for different depth ranges. For each depth range (i.e., each range of target distances), a receiver may operate to receive reflected signal(s) only during the time window in which a reflection would be expected to be received after a round trip time - i.e., to send a transmission to, and receive a reflection back from, a target located in the depth range. Just as an example, the first non-adjacent light source 202 may generate a first coded transmission signal for a first depth range, e.g., from 15 m to 45 m. One or more sensors (e.g., sensors in the CMOS image sensor 214) may be operated to receive a reflected signal during a corresponding receive window, e.g., from 100 nanoseconds (nsec) to 300 nsec, associated with the first depth range. The second non-adjacent light source 204 may generate a second coded transmission signal for a second depth range, e.g., from 45 m to 75 m. One or more sensors (e.g., sensors in the CMOS image sensor 214) may be operated to receive a reflected signal during a corresponding receive window, e.g., from 300 nsec to 500 nsec, associated with the second depth range. The third non-adjacent light source 206 may generate a third coded transmission signal for a third depth range, e.g, from 75 m to 105 m. One or more sensors (e.g., sensors in the CMOS image sensor 214) may be operated to receive a reflected signal during a corresponding receive window, e.g., from 500 nsec to 700 nsec, associated with the depth range.

The fourth non-adjacent light source 208 may generate a fourth coded transmission signal for a fourth depth range, e.g., from 105 m to 135 m. One or more sensors (e.g., sensors in the CMOS image sensor 214) may be operated to receive a reflected signal during a corresponding receive window, e.g., from 700 nsec to 900 nsec, associated with the fourth depth range. A uniform speed of light of $3*10^8$ m/sec is assumed in this simple example. In practice, the specific receive window values may be fine-tuned to adjust for differences in the speed of signal propagation for environmental conditions, different wavelengths of light, as well as other factors.

Reception of reflection signals(s) for each depth range can thus be isolated. By operating the receiver (e.g., CMOS image sensor 214) with appropriate time windows, only reflection signal(s) for the appropriate depth range is captured, while reflection signal(s) for other depth ranges are rejected. While the example above illustrates isolation of different depth ranges using a single receiver (e.g., CMOS image sensor 214), multiple receivers may be use in other embodiments. For example, a separate receiver may be used for receiving reflection signal(s) during the time window corresponding to each depth range.

In some embodiments, different light sources used for different depth ranges may also be pointed in different directions. For example, a light source for a first depth range may aim toward a center portion of a field of view (e.g., a middle region of the FOV of the mobile device 200). Light sources for other depth ranges, e.g., greater depths, may aim toward a peripheral portion of the field of view (e.g., outer regions of the FOV of the mobile device 200). Such other depth ranges may correspond to the depth(s) of the background. In some instances, no reflection may be generated for such peripheral portions of the FOV, if the background is too far away or if no objects are present in the background. Furthermore, in some embodiments, a light source having a relatively long wavelength (e.g., red light wavelengths, as opposed to ultraviolet light, UV, wavelengths) may be used for applications where a single coded light transmission is used for estimating the range of both foreground and background objects. Light of relatively longer wavelengths generally has more ability to "bend" around objects. Thus, such light may be more suitable for reflection off of foreground objects as well as bending around foreground objects to reach more background objects.

In some embodiments, multiple windows corresponding to different depth ranges may be used for a single code sequence. For example, a coded light transmission may reflect off of different objects/surfaces at different depths, including objects in the foreground as well as objects in the background. Correlation of the resulting received signal using the known code sequence at various code phase delays may generate multiple peaks, each peak corresponding to a depth/distance of one of the objects. In one embodiment, the first peak (i.e., shortest depth) may be identified as the primary target and the remaining peaks may be ignored. Alternatively, the remaining peaks may be identified as the background and/or used to determine the depth field.

According to some embodiments of the disclosure, orthogonality in the transmission and/or reception of signals can flexibly leveraged to achieve various design goals. For instance, in some embodiments described above, the coded transmission signals generated by the non-adjacent light sources 202, 204, 206, and 208 may be coded using orthogonal code sequences and/or may utilize different wavelengths of light, which can also be orthogonal to one another. During reception, the receiver(s) can take advantage of such orthogonality (e.g., orthogonal code sequences, orthogonal wavelengths), as well as orthogonality of different receive windows corresponding to different range depths, to make time-of-flight (TOF) operations more efficient.

In some embodiments, mobile device 200 leverages such orthogonality to reduce the amount of "scan time" required to scan for potential targets in a depth field. Instead of sequentially scanning each depth range (i.e., sending transmission signal(s) and receiving reflection signal(s) for each depth range in sequential order), mobile device 200 may simultaneously scan multiple depth ranges, by taking advantage of the ability to separate reflection signal(s) based on (1) different code sequences, (2) different wavelengths, and/or (3) different depth range time windows. Coded transmission signals for multiple depth ranges may overlap in time (e.g., simultaneously). Reflection signals from different depth ranges can be received and separated using knowledge of the different codes, different wavelengths, and/or different time windows. The "scan time" required for scanning an entire depth field comprising multiple depth ranges can thus be reduced by at least a factor of D, where D is an integer number proportional to the number of depth ranges. In the example above utilizing four depth ranges, the amount of "scan time" may be reduced by at least a factor of D = 4, for instance.

FIG. 2B shows another design of a mobile device 220 configured for time-of-flight range estimation, according to an aspect of the disclosure. Here, the mobile device 220 is a regular mobile device without any special hardware components. Instead, coded time-of-flight range estimation is performed by using components that may already exist as part of a camera system in the mobile device 220. For example, the mobile device 220 comprises a single light source 222 and a CMOS image sensor 224, which may be part of the standard rear-facing camera system of the mobile device 220. The CMOS image sensor may already be used to capture images, i.e., photos, on the rear-facing side of the mobile device 220. The single light source 222, e.g., an LED device, may already be used to provide a flash when the CMOS image sensor 224 is used to capture images in dimly lit conditions. By using such existing components to perform coded time-of-flight range estimation, the benefits of range estimation can be attained without increasing the build of materials (BOM) and overall cost of the mobile device 200.

Even though the mobile device 220 utilizes components that already exist as part of the device's camera system, such re-use of existing components does not necessarily limit the features and applications of the coded time-of-flight range estimation being performed. For example, range estimation can be obtained for different parts of a field of view (FOV) using coded light transmissions. In some embodiments, the single light source 222 projects a coded light transmission with a sufficiently wide beam angle to cover an entire FOV. The coded light transmission reflects off of various surfaces within the FOV, resulting in reflected light from the coded light transmission returning from different portions of the FOV, which is captured by the CMOS image sensor 224. Sensors in the array of the CMOS image sensor 224 may be divided into groups (e.g., based on a grid having M column and N rows). Each group of sensors captures the light reflected from a corresponding portion of the FOV and provides the basis for a range estimate for that portion of the FOV. Applications for such range estimation for different parts of the field of view may include, for example, an auto-focus feature, a depth-of-field (DoF) adjustment, foreground and background differentiation, etc. Also, the CMOS image sensor 224 may be operated with appropriate time windows to capture only reflected signals for a certain depth range while rejecting reflection signals for other depth ranges, thus effectively isolating reflected signals for desired depth ranges.

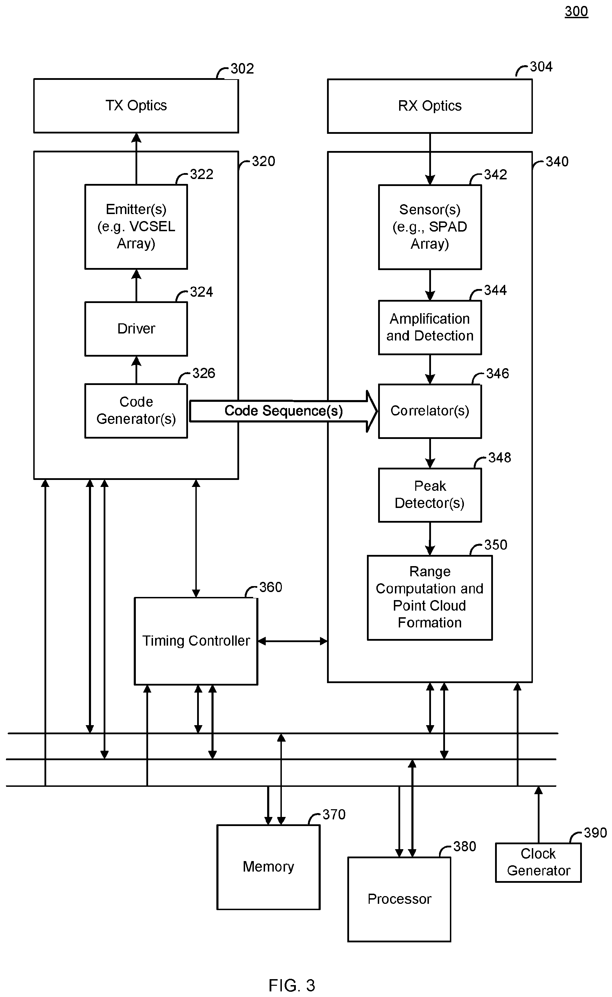

FIG. 3 is a block diagram of a time-of-flight range estimation system 300, according to an aspect of the disclosure. As shown, system 300 comprises transmit side components, receive side components, and shared components that may be shared between the transmit and the receive side of the system 300. The transmit side components may include one or more transmit optics 302 and a transmitter module 320. The one or more transmit optics 302 may include optical components such as lenses, diffraction gratings, etc., that are utilized to collimate, focus, re-direct, or otherwise control light transmission emanating from transmit side of the system 300 toward the target (e.g., one or more target objects or a target field of view). The transmitter module 320 may include one or more light emitters 322, one or more drivers 324, and one or more code generators 326.

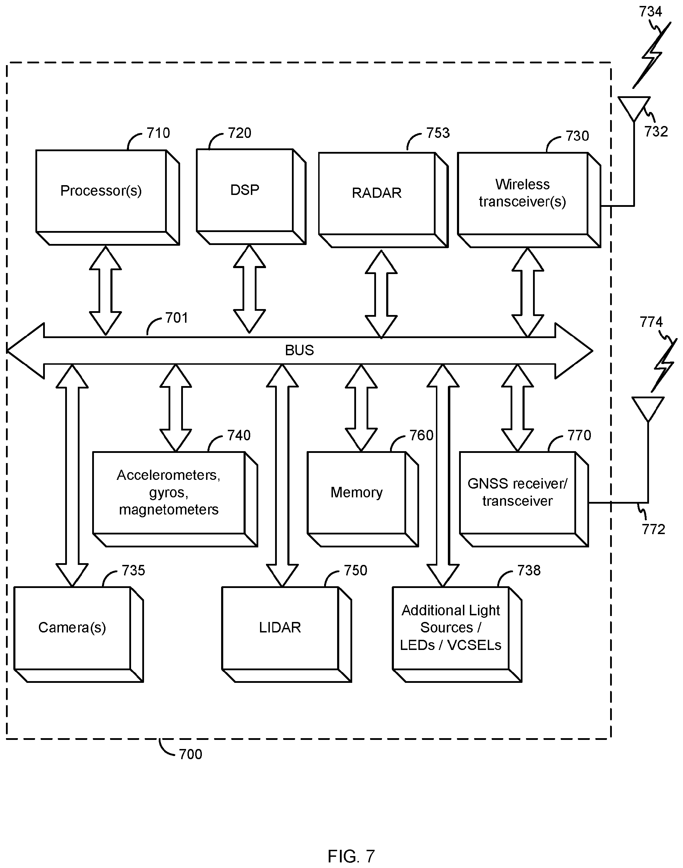

The one or more emitters 322 may comprise adjacent or non-adjacent light sources, such as LEDs, VCSELs, and/or other types of light sources. The one or more emitters 322 can emit light of the same or different wavelengths, depending on implementation. The one or more emitters 322 can be arranged in an array, e.g., a one-dimensional array or a two-dimensional array, such as that described previously in transmitter 102 in FIG. 1. Alternatively or additionally, the one or more emitters 322 can also be arranged as separate light sources, such as that described previously as non-adjacent light sources 202, 204, 206, and 208 and/or the single light source 212 in FIG. 2A or 2B. The one or more drivers 324 provide the appropriate voltage and/or current for driving the one or more emitters 322 to generate light emissions according to one or more coded sequences. The one or more drivers 324 may comprise amplifier(s) and/or amplifier stage(s) for converting supply voltage(s) to single-ended or differential driving voltages/currents to the one or more emitters 322. The one or more emitters 322 and one or more drivers 324 may be part of flash of a convention camera system, such as camera 735 in FIG. 7, described in later sections.

The one or more code generators 326 generate the one or more coded sequences and provide them to the one or more drivers 324. Coded sequences may be selected based on their auto-correlation and cross-correlation properties. In some embodiments, the coded sequences have an auto-correlation function characterized by a positive, linear slope toward a peak value corresponding to a zero-code phase shift and a negative, linear slope away from the peak value corresponding to the zero-code phase shift. In some embodiments, the coded sequences are orthogonal with respect to one another and have a cross-correlation function characterized by a zero or near zero cross correlation value between any two different code sequences, regardless code phase shift. In certain embodiments, a pulse generator (not shown) provides a pulse to the code generator 326, to "kick off" the generation of one or more code sequences. In other embodiments, the pulse generator is eliminated, and the code generator 326 generates each code sequence with proper timing without utilizing a pulse signal as an input. Proper timing and synchronization with the receive side may be provided to the code generator 326 and/or the pulse generator, to allow precise timing control of the generated code sequence(s). Such precise timing control facilitates comparison of (1) the timing of transmission of coded light transmission(s) to (2) the timing of reception of reflected signal(s), as discussed in more detail in later sections.

The receive side components of system 300 may include one or more receive optics 304 and a receiver module 340. The one or more receive optics 304 may include optical components such as lenses, diffraction gratings, color filters, apertures, etc., that are utilized to collimate, focus, re-direct, filter, or otherwise control light received at the receive side of the system 300 and direct the light toward light sensor(s) 342. The receiver module 340 may include one or more light sensors 342, amplification and detection circuitry 344, one or more correlators 346, one or more peak detectors 348, and a range computation unit 350.

The one or more light sensors 342 can be based on different technologies for conversion of photon(s) to an electronic signal or other type of signal capable of being processed by downstream components (e.g., an amplifier, a detection unit, a correlation unit, etc.). As mentioned previously, one example of such technology is a single-photon avalanche diode (SPAD). A SPAD sensor is generally characterized by single-event detection that occurs when a reverse-biased photodiode is triggered to generate an avalanche of current that grows exponentially by a as few as a single photon of light. Such a SPAD sensor can be quite sensitive and conducive to the detection of the timing of arrival of reflected light. However, the single-event detection does not easily provide a mechanism for sensing the magnitude of light beyond detecting the presence of light. Also, such a SPAD sensor typically does not provide a continuous output, because the SPAD circuit generally requires a quenching cycle to reset the photodiode into an initial state from which a new avalanche current can be triggered. Nevertheless, embodiments of the disclosure may utilize SPAD sensors in detecting one or more coded light transmissions. For example, in some embodiments, a code sequence may modulate the transmission of light using a binary pattern, e.g., ON or OFF, to represent the code. In such a modulation scheme, it may be sufficient to detect the presence versus the absence of light. Furthermore, in some embodiments, a code sequence may be modulated over different wavelengths and/or different positions in space, e.g., by applying the coded sequence across a plurality of light sources. Single-event detection at each of a plurality of corresponding light sensors may be used in the detection and correlation of the code sequence within the reflected signal. Also, depending on implementation, the cycle time of the quenching circuit for each SPAD sensor may be designed to be short enough to support a sampling frequency that is still capable of sampling and detection of a code sequence that used to modulate a light transmission over time, taking into account the chip period of the code sequence used.

The one or more light sensors 342 can comprise individual sensors, including sensors arranged in a one-dimensional or two-dimensional array, such as the two-dimensional array of PIN photodiodes in a CMOS image sensor device or a two-dimensional array of SPADs shown in FIG. 1. The one or more light sensors 342 can also comprise non-adjacent sensors, such as the CMOS image sensor 214 shown in FIG. 2. The one or more sensors 342 may be capable of detecting light of different wavelengths. Embodiments of the disclosure provide for varied configurations for detection of different light wavelengths. In some embodiments, each sensor in a group of sensors may be capable of separately detecting light of a different wavelength. For example, a different color filter may be positioned in the light path over each sensor in the group of sensors. The color filters may be part of the one or more receive optics 304. Each color filter may be configured to allow light within a specific range of wavelengths to substantially pass through while substantially blocking light outside the specific range of wavelengths. Alternatively or additionally, a sensor may detect light of different wavelengths. In some embodiments, a sensor may be controllable to detect light of different wavelengths at different times.

In some embodiments, the one or more light sensors 342 comprise pixels and sub-pixels. A pixel may comprise multiple sub-pixels of different colors. Each sub-pixel may include one or more filters for filtering incoming light to allow transmission of light of a particular wavelength or wavelength range while blocking other wavelengths, as well as one or more photodiodes or other light sending devices to sense an intensity of the filtered light. For example, the CMOS image sensor 214 may comprise a two-dimensional array of pixels, with each pixel comprising a plurality of sub-pixels.

As discussed, light sensors such as the one or more light sensors 342, according to embodiments of the present disclosure, may serve dual purposes: (1) as image sensors for generating images from incoming light (e.g., as a camera) and (2) as sensors for light-based range estimation. When the one or more light sensors 342 are used as image sensors, intensity values generated from sub-pixels of the one or more light sensors 342 may be used in processes, such as demosaicing, for reconstruction of a full color image. When the one or more light sensors 342 are used as sensors for range-based range estimation, the intensity values generated from sub-pixels of the one or more light sensors 342 may be separately processed based on color, to generate range estimates. Thus, instead of combining intensity values of different colors from the sub-pixels to generate a color image, the receiver module 340 may isolate a particular color, for example, for light-based range estimation. Alternatively or additionally, the receiver module 340 may correlate intensity values collected across multiple colors of sub-pixels against known color-coded transmission patterns, to generate range estimates.

The amplification and detection circuit 344 may comprise one or more amplifiers, analog to digital (A/D) converters, comparator(s), and/or sampling circuit(s). The components of the amplification and detection circuit 344 may work to amplify and/or detect the reflected signal(s) based on the output(s) of the one or more light sensors 342. The amplification and detection circuit 344 may generate an analog or digital output that represents the received signal as sensed by the one or more sensors 342, which can include not only components corresponding to reflection of the coded transmission signal reflected off of target surface(s), but also components from ambient light or other light sources. Thus, the actual reflected signal corresponding to reflection off of the target surface(s) may have relatively low amplitude and be "in the noise" (e.g., below the noise floor) within a noisy signal. The amplification and detection circuit 344 and one or more light sensors 342 may be part of a convention camera system, such as camera 735 in FIG. 7, described in later sections.

The one or more correlators 346 correlate the output of the amplification and detection circuit 344 against one or more code sequences used to encode the one or more coded light transmissions sent by the transmit side of the time-of-flight range estimation system 300. The same code sequence(s) are used by the one or more code generators 326 and the one or more correlators 346. By correlating the received signal against a known code sequence, a correlator may in effect increase the signal to noise ratio and extract the relevant code light transmission out of the noise. The one or more correlators 346 may continuously correlate the received signal (e.g., output of the amplification and detection circuit 344) as the signal is being received. Thus, correlation may be performed at different code phase shifts. As discussed, the one or more code sequences may be selected based on their auto-correlation and cross-correlation properties. In some embodiments, the coded sequences have an auto-correlation function characterized by a positive, linear slope toward a peak value corresponding to a zero-code phase shift and a negative, linear slope away from the peak value corresponding to the zero-code phase shift. In some embodiments, the coded sequences are orthogonal with respect to one another and have a cross-correlation function characterized by a zero or near zero cross correlation value between any two different code sequences, regardless code phase shift. Once code-phase alignment is achieved, a peak may appear in the output of the relevant correlator.

One or more peak detectors 348 receives the output of the one or more correlators 346 and is configured to detect a peak in the correlation output signal(s). For example, the output of the one or more correlators 346 may be compared to a hard or soft threshold value. When the output exceeds the threshold, the relevant peak detector may indicate that a positive correlation has been attained and mark the location of the peak. Such a peak indicates that a particular code sequence has been detected with proper code phase alignment. Thus, the location of the peak may be used to determine the position of the coded sequence within the reflected version of the relevant coded light transmission. This timing information may correspond to a particular time-of-flight (ToF) value. Thus, the ToF value can be unit-less or expressed in various units or measures, such as a number of chips or sub-chips of the code sequence, an actual measure of elapsed time such as a number of milliseconds (msec), or other units.

The range computation unit 350 receives the output of the one or more peak detectors 348 and is configured to compute a range estimate for each detected peak. For each detected peak, the range computation unit 350 may compare the timing of the encoding of the code sequence in the coded light transmission against the location of the detected peak. The code phase offset between the transmission and reception of the coded light sequence, expressed in units of time, indicates a round-trip time (RTT). The range estimate may be computed based on the speed of the light transmission through the medium (e.g., speed of light through air) and the code phase offset. A uniform speed of light of 3*10^8 m/sec is assumed below. In practice, the specific receive window values may be fine-tuned to adjust for differences in the speed of signal propagation for environmental conditions, different wavelengths of light, as well as other factors. For example, a range estimate may be based on the following equation:

$$Range\ Estimate = \frac{1}{2} * 3 * 10^{8} m/\sec * code\ phase\ offset\ (in\ units\ of\ time)$$

In some embodiments, the code length is selected to be sufficiently large as to provide a range of code phase offsets that covers the entire span of ranges to be estimated. Just as an example, if the span of ranges extends from 0 meter to 0.25 meters, the code length may be selected to be at least (2*0.25 m) / (3*10^8 m/sec) = 1.67 nanoseconds. Furthermore, the correlator does not necessarily have to receive the entire code sequence to produce a peak. Even reception of a partial code sequence can generate a peak (albeit at a reduced magnitude) at the code phase offset corresponding to the range estimate. For example, the peak detector may be configured to detect a peak when the correlator reaches a threshold, and such peak detection may occur before an entire code sequence is received.

The range computation unit 350 may also generate a point cloud corresponding to sensed surface(s) in the field of view based on multiple range estimates. Each point in such a point cloud may comprise a different range estimate indicating a depth value corresponding to the distance between the time-of-flight range estimation system 300 and a particular point in the field of view.

The resulting range estimates may be used for different applications. Just as an example, the range estimates may be used for motion mapping, extrapolation, and/or prediction. A change in motion may be estimated based on the delay period at which the correlation peaks appear. The change in motion may take different forms, such as linear motion or oscillating motion such as a hand that is held mid-air with a jitter-like movement. In one embodiment, in response to detecting a jitter, the depth of field may be increased while an object is approaching (moving closer) or moving away. Such detection of depth changes may be utilized, for example, in a predictive auto-focus feature in a camera for capturing images of a moving object. In some embodiments, range estimates generated using coded light transmissions may be used in image post-processing - i.e., processing performed after an image is captured by a camera. For example, a captured image may be sharpened and/or convolved with a two-dimensional filter based on the estimated distances.

Shared components, which are shared between the transmit and the receive side of the system 300, may include a timing controller 360, memory 370, one or more processors 380, and a clock generator 390. The shared components may initiate and control the operation of various components on the transmit side and receive side of the system 300. In particular, timing coordination between the transmit side and the receive side of the system 300 allows precise evaluation of code phase offsets, round-trip time estimates, and ultimately range estimates to be achieved. The shared components may support such coordination of timing. For example, the clock generator 390 may generate a common clock having a sufficiently high clock frequency to allow precise timing control and measurements to be made based on the common clock signal. The common clock signal may be provided to various components within the transmitter module 320 and the receiver module 340, as well as the timing controller 360. The timing controller 360 may be configured to control the timing of the one or more code generators 326, one or more correlators 346, and one or more peak detectors 348. Also, the memory 370 and one or more processors 380 may be configured to provide code sequences shared across the transmit and receive side of the system 300. For example, the memory 370 may store the code sequences, and the one or more processors 380 may operate to retrieve the codes sequences and load them to the one or more code generators 326 and the one more correlators 346 as a part of a configuration sequence.

While the components of the system 300, including the components of the transmitter module 320 and receiver module 340, are shown as individual modules in FIG. 3, they can be implemented within one or more processors and memory. Also, FIG. 3 is presented as an example only. Some or all of the components of the transmitter module 320 and receiver module 340 may be combined, divided, replicated, and/or eliminated according to various embodiments. In some embodiments, the one or more code generators 326, the one or more correlators 346, one or more peak detectors 348, and/or the range computation unit 350 are implemented using one or more processors and memory. Such one or more processors and memory may include, for example, one or more processors 380 and memory 370, described in more detail below. Such processor(s) and memory may be implemented as part of a user equipment device, for example, as processor 710 and memory 760 discussed later in connection with FIG. 7. Some or all of the components of the transmitter module 320 and receiver module 340 - e.g., such as code generator 390, one or more emitters 322, one or more drivers 324, one or more light sensors 342, amplification and detection circuit 344, one or more correlators 346, one or more peak detectors 348, and range computation unit 350 - may be implemented on a common semiconductor die, on two or more semiconductor dies and packaged together in a common integrated circuit package (i.e., "chip"), or as two or more separate integrated circuit packages (i.e., "chips").

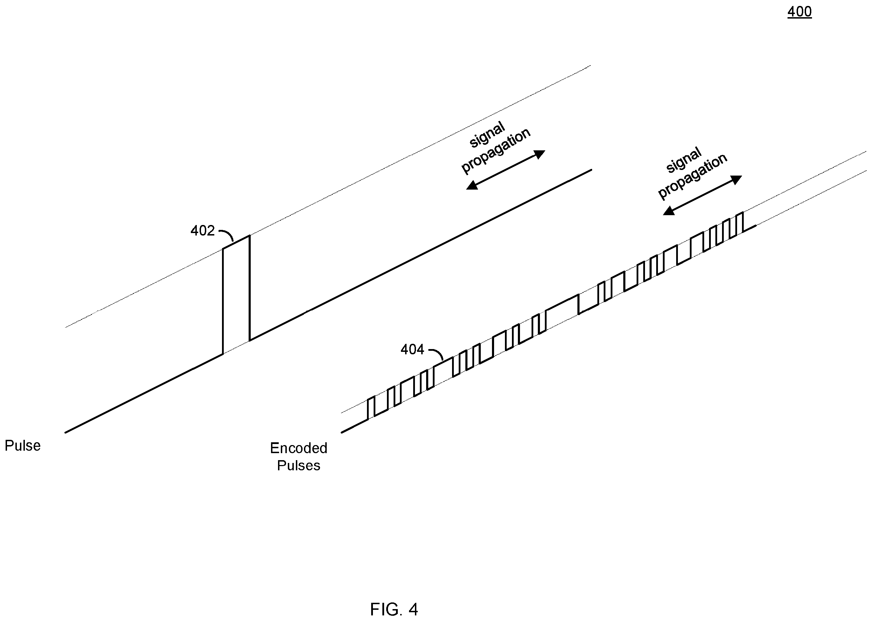

FIG. 4 illustrates a comparison 400 of (1) a conventional pulse light transmission and (2) a coded light transmission that distributes signal energy over time, according to an aspect of the disclosure. Here, a conventional pulse light transmission may be characterized by a single pulse 402. A time-of-flight range (ToF) range estimation system may transmit such a pulse 402 along a path of signal propagation toward a target (not shown). The pulse may reach the target and reflect off of the surface of the target, in the form of a reflected signal. The reflected signal may travel in the reverse direction from the target toward the ToF range estimate system. Based on the time difference between the time of transmission of the pulse 402 within the transmission signal and the time of reception of the same pulse within the reflected signal, the ToF range estimation system may deduce the round-trip time (RTT) associated with the signal reflection and use the RTT to compute a range estimate representing the distance between the ToF range estimation system and the target.

Generally speaking, the pulse 402 is designed to have a specified positive amplitude, e.g., $A_0$, that is sufficiently large to ensure proper detection of the reflected pulse. The large amplitude may be needed in order to account for any attenuation along the path of signal propagation in the forward direction and reverse direction, attenuation associated with reflection off of the surface of the target, as well as the presence of noise in the form of ambient light and/or other light sources. The resulting amplitude of the pulse 402 may be so large that the transmission signal may be associated with a health or safety concern, such as risk of excessive light exposure to the human eye. However, reducing the amplitude of the pulse 402 to safer levels may be associated with poor or failed reception and correlation of the reflected signal and lead to a significant reduction of the effective detection range of the ToF system.

By contrast, pulses 404 in a coded light transmission exhibit a markedly lower amplitude and, correspondingly, lower risk of health or safety impacts. Yet, embodiments of the time-of-flight (ToF) system according to the present disclosure are capable of reliably generating one or more range estimates over relatively long distances, by leveraging knowledge of the code sequence(s) and correlating the reflected signal(s) using the known code sequence(s). The system may transmit the coded light transmission along a path of signal propagation toward a target (not shown). The coded light transmission may reach the target and reflect off of the surface of the target, in the form of a reflected signal. The reflected signal, which contain reflected versions of the pulses 404, may travel in the reverse direction from the target toward the ToF range estimate system. By correlating the reflected signal with the known code sequence, the ToF system can generate a code phase difference, which translates to a time difference between the time of transmission of the pulses 404 within the coded transmission signal and the time of reception of the same pulse 404 within the reflected signal. The ToF range estimation system may thus deduce the round-trip time (RTT) associated with the signal reflection and use the RTT to compute a range estimate representing the distance between the ToF range estimation system and the target.

According to various embodiments of the disclosure, different types of code modulation may be used. For example, the coded light transmission with pulses 404 shown in FIG. 4 is modulated with a code sequence using an amplitude-based code over time. The code used in this example exhibits binary values, e.g., each code value may be "0" or "1." The binary code may be amplitude modulated such that a "0" code value corresponds to the coded light transmission pulse 404 having an amplitude of zero or near zero, and a "1" code value corresponds to the coded light transmission pulse 404 having a specified positive amplitude, e.g., $A_1$, that is significantly lower than the amplitude, e.g., $A_0$, of a single pulse such as pulse 402. In another example (not shown in FIG. 4), the coded light transmission may be modulated with a wavelength-based code over time. Here, the amplitude of the coded light transmission may stay relatively constant. However, the wavelength of the light transmission may change based on the code sequence. For instance, for a binary code in which each code value may be "0" or "1," the wavelength of the light transmission may switch to (1) a first wavelength $\omega_0$ when the code value is "0" and (2) a second wavelength $\omega_1$ when the code value is "1." Regardless of what type of modulation is used, the instantaneous amplitude of the transmission signal stays significantly lower than the amplitude of a pulse, such as pulse 402, in a conventional ToF system.

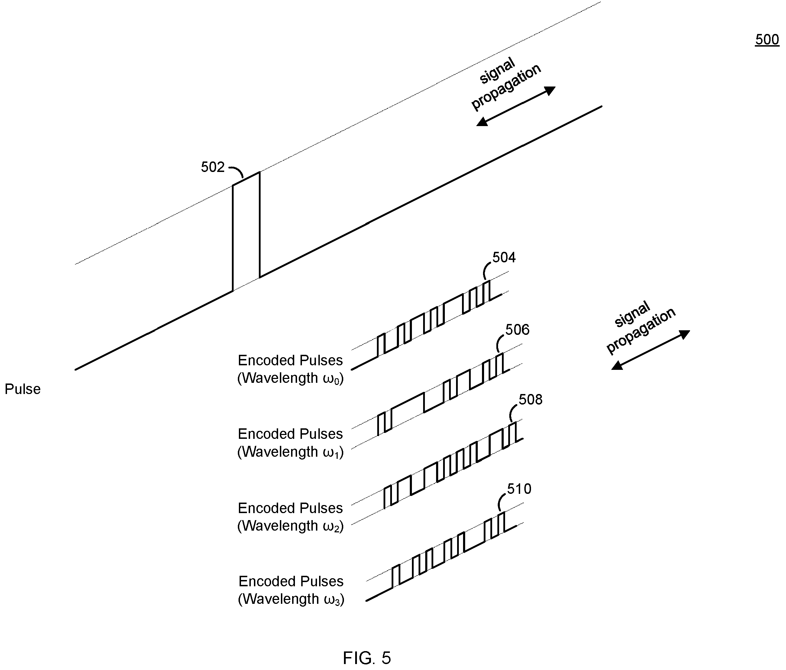

FIG. 5 illustrates a comparison 500 of (1) a conventional pulse light transmission and (2) a coded light transmission distributing signal energy over time and multiple wavelengths, according to an aspect of the disclosure. Once again, the amplitude e.g., $A_0$, of a single pulse 502 in such a conventional pulse light transmission may be so large that the transmission signal may be associated with a health or safety concern. Instead, according to some embodiments of the disclosure, time-of-flight range (ToF) range estimation may be performed based on transmission of coded light transmissions and reception of reflected signals. Here, the coded light transmissions distribute the energy of the signal over both time and multiple wavelengths, with individual coded pulses having a reduced amplitude, e.g., $A_1$. In the example shown in FIG. 5, four separate coded light transmissions using light of different wavelengths are sent toward the target. These include a first coded light transmission having a first wavelength $\omega_0$ and modulated with a first code sequence with pulses 504, a second coded light transmission having a second wavelength $\omega_1$ and modulated with a second code sequence with pulses 506, a third coded light transmission having a third wavelength $\omega_2$ and modulated with a third code sequence with pulses 508, and a fourth coded light transmission having a fourth wavelength $\omega_3$ and modulated with a fourth code sequence with pulses 510.

In some embodiments, coded light transmissions of different wavelengths may be generated using separate emitters. For example, the four coded light transmissions shown in FIG. 5 may be generated using four different light sources, each configured to emit light of a different wavelength. In some embodiments, such light sources may be arranged at non-adjacent positions on a device. For instance, the non-adjacent light sources 202, 204, 206, and 208 shown in FIG. 2 may be configured to emit light of wavelengths $\omega_0$, $\omega_1$, $\omega_2$, and $\omega_3$, respectively. Alternatively, such light sources may be arranged at adjacent positions on a device. In other embodiments, coded light transmissions of different wavelengths may be generated using a single emitter. For example, a light source may be controllable to emit light of different wavelengths at different times.

Reception of the coded light transmissions of different wavelengths may be performed in different ways, according to various aspects of the disclosure. In some embodiments, each wavelength of reflected light is isolated using hardware such as a specific color filter corresponding to the particular wavelength (or range of wavelengths), placed in the light path before the light is received by a sensor. In one example, a color CMOS image sensor (e.g., CMOS image sensor 214 in FIG. 2A or CMOS image sensor 224 in FIG. 2B) may comprise different sensors for red, green, and blue (RGB) color channels for each pixel. Signals from the RGB color channels may be processed to isolate reflected light of different wavelengths, such as $\omega_0$, $\omega_1$, $\omega_2$, and $\omega_3$, by employing digital filtering, mixing, etc.

Once each reflected light of a particular wavelength is isolated, the reflected signal (of a particular wavelength) may be correlated with the known code sequence used to generate the coded light transmission, to generate a code phase shift. For example, the output of the correlator may contain a peak, and the location of the peak may indicate the code phase shift. The code phase shift may be used to compute a round-trip time (RTT) value, which may be used to compute a range estimate. Processing of reflected light of each wavelength may be carried out, for example, by the components of the receiver module 340 shown in FIG. 3, including one or more light sensors 342, amplification and detection circuit 344, one or more correlators 346, one or more peak detectors 348, and a range computation unit 350.

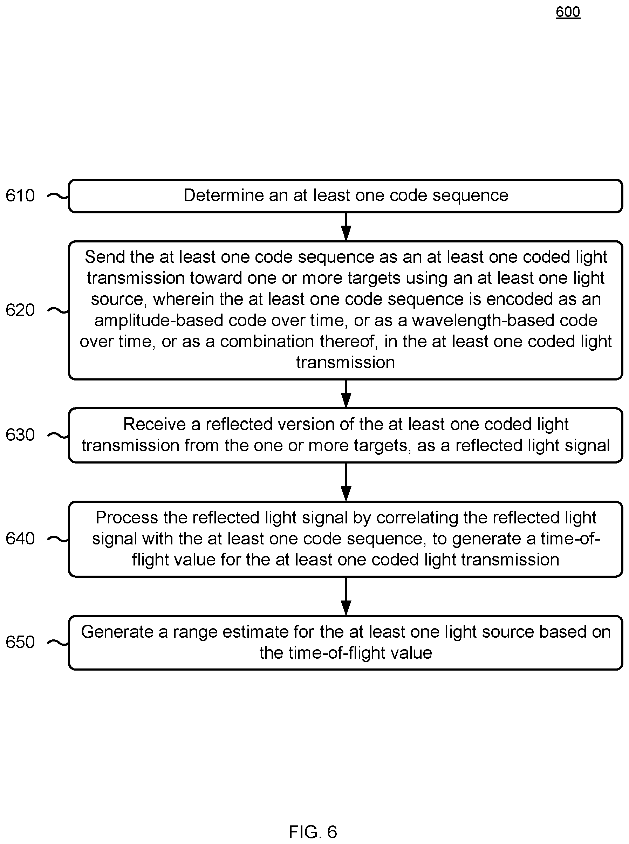

FIG. 6 is a flowchart of an example process 600 associated with coded time-of-flight range estimation. In some implementations, one or more process blocks of FIG. 6 may be performed by a range estimator (e.g., a time-of-flight range estimation system 300). In some implementations, one or more process blocks of FIG. 6 may be performed by another device or a group of devices separate from or including the range estimator. Additionally, or alternatively, one or more process blocks of FIG. 6 may be performed by one or more components of a user equipment device 700, such as camera(s) 735, LIDAR 750, processor(s) 710, and/or memory 760, as shown in FIG. 7.

As shown in FIG. 6, process 600 may include determining an at least one code sequence (block 610). For example, the range estimator may determine an at least one code sequence, as described above. Means for generating the at least one code sequence may include, for example, the one or more code generators 326, the processor 380, and/or the memory 370 shown in FIG. 3. As further shown in FIG. 6, process 600 may include sending the at least one code sequence as an at least one coded light transmission toward one or more targets using an at least one light source, wherein the at least one code sequence is encoded as an amplitude-based code over time, or as a wavelength-based code over time, or as a combination thereof, in the at least one coded light transmission (block 620). For example, the range estimator may send the at least one code sequence as an at least one coded light transmission toward one or more targets using an at least one light source, wherein the at least one code sequence is encoded as an amplitude-based code over time, or as a wavelength-based code over time, or as a combination thereof, in the at least one coded light transmission, as described above. Means for sending the at least one code sequence as an at least one coded light transmission toward the one or more targets may include, for example, the one or more emitters 322 and/or the one or more transmit optics 302 shown in FIG. 3.

As further shown in FIG. 6, process 600 may include receiving a reflected version of the at least one coded light transmission from the one or more targets, as a reflected light signal (block 630). For example, the range estimator may receive a reflected version of the at least one coded light transmission from the one or more targets, as a reflected light signal, as described above. Means for receiving the reflected light signal may include, for example, the one or more receive optics 304, the one or more light sensors 342, and/or the amplification and detection circuit 344 shown in FIG. 3. As further shown in FIG. 6, process 600 may include processing the reflected light signal by correlating the reflected light signal with the at least one code sequence, to generate a time-of-flight value for the at least one coded light transmission (block 640). For example, the range estimator may process the reflected light signal by correlating the reflected light signal with the at least one code sequence, to generate the time-of-flight value for the at least one coded light transmission, as described above. Means for correlating the reflected light signal with the at least one code sequence may include, for example, the one or more correlators 346 shown in FIG. 3. As further shown in FIG. 6, process 600 may include generating a range estimate for the at least one coded light transmission based on the time-of-flight value (block 650). For example, the range estimator may generate a range estimate for the at least one coded light transmission based on the time-of-flight value, as described above. Means for generating the range estimate may include, for example, the range computation unit 350 shown in FIG. 3.

Process 600 may include additional implementations, such as any single implementation or any combination of implementations described below and/or in connection with one or more other processes described elsewhere herein. In a first implementation, the at least one light source comprises a one-dimensional array of light sources. In a second implementation, the at least one light source comprises a two-dimensional array of light sources. In a third implementation, the at least one light source comprises at least two non-adjacent light sources. In a fourth implementation, the at least one code sequence comprises a plurality of orthogonal code sequences. In a fifth implementation, each of the plurality of orthogonal code sequences is transmitted by a different light source, of the at least one light source. In a sixth implementation, the at least one coded light transmission comprises a first coded light transmission for a first depth range and a second coded light transmission for a second depth range. In a seventh implementation, the receiving the reflected version of the at least one coded light transmission, as a reflected light signal, comprises (1) operating an at least one receiver during a first receive window associated with a first range of roundtrip delays corresponding to the first depth range and (2) operating the at least one receiver during a second receive window associated with a second range of roundtrip delays corresponding to the second depth range. In an eighth implementation, the first coded light transmission and the second coded light transmission overlap in time. In a ninth implementation, the first coded light transmission is sent using light emitted at a first wavelength, and the second coded light transmission is sent using light emitted at a second wavelength different from the first wavelength. In a tenth implementation, the at least one coded light transmission spans a plurality of transmission opportunities, as a plurality of chips, along the time axis. In an eleventh implementation, the at least one coded light transmission spans a plurality of transmission opportunities, as a plurality of wavelength bands, along the wavelength axis. In a twelfth implementation, the at least one light source comprises an at least one light emitting diode (LED). In a thirteenth implementation, the at least one light source comprises an at least one vertical-cavity surface-emitting laser (VCSEL). In a fourteenth implementation, the at least one VCSEL is within a two-dimensional array of VCSELs. In a fifteenth implementation, the reflected light signal is received using an at least one complementary metal oxide semiconductor (CMOS) image sensor. In a sixteenth implementation, the reflected light signal is received using an at least one single-photon avalanche diode (SPAD). In a seventeenth implementation, the at least one SPAD is within a two-dimensional array of SPADs.

Although FIG. 6 shows example blocks of process 600, in some implementations, process 600 may include additional blocks, fewer blocks, different blocks, or differently arranged blocks than those depicted in FIG. 6.

FIG. 7 is a block diagram of various hardware and software components of a user equipment device 700 employing an image capture apparatus capable of capturing an expanded field of view, according to an aspect of the disclosure. The various components of device 700 described below are coupled via one or more data interfaces, such as a data bus 701. An example of device 700 may be an environment monitoring device, a mobile handset device, a wearable device, a vehicle, a drone, or another device taking image data as input. In one example, device 700 may communicate, via wireless transceiver(s) 730 and wireless antenna(s) 732 with other devices and/or wireless communication networks by transmitting wireless signals to, or receiving wireless signals from a remote wireless transceiver which may comprise another device, a base station (e.g., a NodeB, eNodeB, or gNodeB) or wireless access point, over a wireless communication link.

Similarly, device 700 may transmit wireless signals to, or receive wireless signals from a local transceiver over a wireless communication link, for example, by using a WLAN and/or a PAN wireless transceiver, here represented by one of wireless transceiver(s) 730 and wireless antenna(s) 732. In an embodiment, wireless transceiver(s) 730 may comprise various combinations of WAN, WLAN, and/or PAN transceivers. In an embodiment, wireless transceiver(s) 730 may also comprise a Bluetooth transceiver, a ZigBee transceiver, or other PAN transceiver. In an embodiment, device 700 may transmit wireless signals to, or receive wireless signals from a wireless transceiver 730 on a device 700 over wireless communication link 734. A local transceiver, a WAN wireless transceiver and/or a mobile wireless transceiver may comprise a WAN transceiver, an access point (AP), femtocell, Home Base Station, small cell base station, HNB, HeNB, or gNodeB and may provide access to a wireless local area network (WLAN, e.g., IEEE 802.11 network), a wireless personal area network (PAN, e.g., Bluetooth network) or a cellular network (e.g., an LTE network or other wireless wide area network such as those discussed in the next paragraph). Of course, it should be understood that these are merely examples of networks that may communicate with a device over a wireless link, and claimed subject matter is not limited in this respect. It is also understood that wireless transceiver(s) 730 may be located on various types of devices 700, such as boats, ferries, cars, buses, drones, and various transport vehicles. In an embodiment, the device 700 may be utilized for passenger transport, package transport or other purposes. In an embodiment, GNSS signals 774 from GNSS Satellites are utilized by device 700 for location determination and/or for the determination of GNSS signal parameters and demodulated data. In an embodiment, signals 734 from WAN transceiver(s), WLAN and/or PAN local transceivers are used for location determination, alone or in combination with GNSS signals 774.

Examples of network technologies that may support wireless transceivers 730 are GSM, CDMA, WCDMA, LTE, 5G or New Radio Access Technology (NR), HRPD, and V2X car-to-car communication. As noted, V2X communication protocols may be defined in various standards such as SAE and ETS-ITS standards. GSM, WCDMA and LTE are technologies defined by 3GPP. CDMA and HRPD are technologies defined by the 3rd Generation Partnership Project II (3GPP2). WCDMA is also part of the Universal Mobile Telecommunications System (UMTS) and may be supported by an HNB.

Wireless transceivers 730 may communicate with communications networks via WAN wireless base stations which may comprise deployments of equipment providing subscriber access to a wireless telecommunication network for a service (e.g., under a service contract). Here, a WAN wireless base station may perform functions of a WAN or cell base station in servicing subscriber devices within a cell determined based, at least in part, on a range at which the WAN wireless base station is capable of providing access service. Examples of WAN base stations include GSM, WCDMA, LTE, CDMA, HRPD, Wi-Fi, Bluetooth, WiMAX, 5G NR base stations. In an embodiment, further wireless base stations may comprise a WLAN and/or PAN transceiver.

In an embodiment, device 700 may contain one or more cameras 735, which may comprise an image capture apparatus capable of capturing an expanded field of view according to various embodiments of the present disclosure. The one or more cameras 735 may include a flash (not shown), e.g., one or more light emitting diode (LED) emitters, which may be used as one or more transmitters of a coded light transmission, in accordance with embodiments of the present disclosure. Light sensors of the one or more cameras 735 may be used as receiver(s) of reflected coded light transmissions in a time-of-flight (TOF) range estimation system, e.g., as described previously. In an embodiment, the camera may comprise a camera sensor and mounting assembly. Different mounting assemblies may be used for different cameras on device 700. The cameras may provide object detection and distance estimation. When used in concert with the other sensors, the cameras may both be calibrated through the use of other systems such as through the use of LIDAR, wheel tick/distance sensors, and/or GNSS to verify distance traveled and angular orientation. The cameras may similarly be used to verify and calibrate the other systems to verify that distance measurements are correct, for example by calibrating against known distances between known objects (landmarks, roadside markers, road mile markers, etc.) and also to verify that object detection is performed accurately such that objects are accordingly mapped to the correct locations relative to the car by LIDAR and other system.

In some embodiments, device 700 includes one or more additional light sources 738 that may be used to transmit one or more coded light transmissions for time-of-flight range estimation. The additional light sources 738 may comprise adjacent light sources, including one-dimensional or two-dimensional arrays of light emitters, such as an array of SPADS 216 or an array of LEDs, or non-adjacent light sources such as non-adjacent light sources 202, 204, 206, and 208, just to name some examples.

Accelerometers, gyros and magnetometers 740, in an embodiment, may be utilized to provide and/or verify motion and directional information. LIDAR 750 uses pulsed laser light to measure ranges to objects. Traditionally, cameras may be used for object detection, while LIDAR 750 provides a means, to detect the distances (and orientations) of the objects with more certainty, especially in regard to objects of unknown size and shape. LIDAR 750 measurements may also be used to estimate rate of travel, vector directions, relative position and stopping distance by providing accurate distance measurements and delta distance measurements. However, in accordance with embodiments of the present disclosure, cameras and/or LIDAR 750 may individually or cooperatively provide distance and/or delta distance estimates. In some embodiments, LIDAR 750 may transmit and receive coded light transmissions to support range estimates, utilizing the techniques presently disclosed. Instead of a single light pulse, LIDAR 750 may send one or more coded light transmissions and receive one or more reflected, coded light transmissions, in order to perform range estimation.

Memory 760 may be utilized with processor 710 and/or DSP 720, which may comprise Random Access Memory (RAM), Read-Only Memory (ROM), disc drive, FLASH, or other memory devices or various combinations thereof. In an embodiment, memory 760 may contain instructions to implement various methods described throughout this description. In an embodiment, memory may contain instructions for operating and calibrating sensors, and for receiving map, weather, and other data.

A global navigation satellite system (GNSS) receiver 770 may be utilized to determine position relative to the earth (absolute position) and, when used with other information such as measurements from other objects and/or mapping data, to determine position relative to other objects such as relative to other vehicles and/or relative to the road surface. To determine position, the GNSS receiver/transceiver/transceiver 770, may receive RF signals 774 from GNSS satellites using one or more antennas 772 (which, depending on functional requirements, may be the same as antennas 732). The GNSS receiver/transceiver/transceiver 770 may support one or more GNSS constellations as well as other satellite-based navigation systems. For example, in an embodiment, GNSS receiver/transceiver/transceiver 770 may support global navigation satellite systems such as GPS, the GLONASS, Galileo, and/or BeiDou, or any combination thereof. In an embodiment, GNSS receiver/transceiver 770 may support regional navigation satellite systems such as NavIC or QZSS or a combination thereof as well as various augmentation systems (e.g., Satellite Based Augmentation Systems (SBAS) or ground based augmentation systems (GBAS)) such as Doppler Orbitography and Radio-positioning Integrated by Satellite (DORIS) or wide area augmentation system (WAAS) or the European geostationary navigation overlay service (EGNOS) or the multi-functional satellite augmentation system (MSAS) or the local area augmentation system (LAAS). In an embodiment, GNSS receiver/transceiver(s) 730 and antenna(s) 732 may support multiple bands and sub-bands such as GPS L1, L2 and L5 bands, Galileo E1, E5, and E6 bands, Compass (BeiDou) B1, B3 and B2 bands, GLONASS G1, G2 and G3 bands, and QZSS L1C, L2C and L5-Q bands.

The GNSS receiver/transceiver 770 may be used to determine location and relative location which may be utilized for location, navigation, and to calibrate other sensors, when appropriate, such as for determining distance between two time points in clear sky conditions and using the distance data to calibrate other sensors such as the odometer and/or LIDAR. In an embodiment, GNSS-based relative locations, based on, for example shared Doppler and/or pseudorange measurements between vehicles, may be used to determine highly accurate distances between two vehicles, and when combined with vehicle information such as shape and model information and GNSS antenna location, may be used to calibrate, validate and/or affect the confidence level associated with information from LIDAR, camera, RADAR, SONAR and other distance estimation techniques.

RADAR 753, uses transmitted radio waves that are reflected off of objects. The reflected radio waves are analyzed, based on the time taken for reflections to arrive and other signal characteristics of the reflected waves to determine the location of nearby objects. RADAR 753 may be utilized to detect the location of nearby cars, roadside objects (signs, other vehicles, pedestrians, etc.) and will generally enable detection of objects even if there is obscuring weather such as snow, rail or hail. Thus, RADAR 753 may be used to complement LIDAR 750 systems and camera 735 systems in providing ranging information to other objects by providing ranging and distance measurements and information when visual-based systems typically fail. Furthermore, RADAR 753 may be utilized to calibrate and/or sanity check other systems such as LIDAR 750 and camera 735.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

With reference to the appended figures, components that can include memory (e.g., memory 760 of FIG. 7) can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including, but not limited to, non-volatile media, volatile media, and transmission media. Common forms of computer-readable media include, for example, magnetic and/or optical media, any other physical medium with patterns of holes, a RAM, a PROM, EPROM, a FLASH-EPROM, any other memory chip or cartridge, a carrier wave as described hereinafter, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus, many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussions utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend at least in part upon the context in which such terms are used. The term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

Having described several embodiments, various modifications, alternative constructions, and equivalents may be used without departing from the scope of the claims. For example, the above elements may merely be a component of a larger system, wherein other rules may take precedence over or otherwise modify the application of the various embodiments. Also, a number of steps may be undertaken before, during, or after the above elements are considered. Accordingly, the above description does not limit the scope of the disclosure.

**Claims**

1. A method, on a device (700), for performing range estimation comprising:

    determining (610) a first code sequence and a second code sequence, wherein the first code sequence is for a first target depth range and the second code sequence is for a second target depth range, wherein the first and second target depth ranges are different;
    sending (620) the first and second code sequences as first and second coded light transmissions toward one or more targets using an at least one light source, wherein the first and second code sequences are encoded as amplitude-based codes over time, or as wavelength-based codes over time, or as combinations thereof, in the first and second coded light transmissions;
    receiving (630), by at least one receiver, during a first receive time window associated with a first range of roundtrip delays corresponding to the first target depth range, a reflected version of the first coded light transmission from the one or more targets, as a first reflected light signal;
    receiving (630), by the at least one receiver, during a second receive time window associated with a second range of roundtrip delays corresponding to the second target depth range, a reflected version of the second coded light transmission from the one or more targets, as a second reflected light signal;
    processing (640) the first and second reflected light signals by correlating the first and second reflected light signals with the first and second code sequences, to generate first and second time-of-flight value for the first and second coded light transmissions; and
    generating (650) first and second range estimates in the first and second target depth ranges for the first and second coded light transmissions based on the first and second time-of-flight values.

2. The method of claim 1, wherein the at least one light source comprises a one-dimensional array of light sources, the one-dimensional array of light sources preferably comprising a first light source emitting the first coded light transmission based on the first code sequence and a second light source emitting the second coded light transmission based on the second code sequence orthogonal to the first code sequence.

3. The method of claim 1, wherein the at least one light source comprises a two-dimensional array of light sources, the two-dimensional array of light sources preferably comprising a first light source emitting the first coded light transmission based on the first code sequence and a second light source emitting the second coded light transmission based on the second code sequence orthogonal to the first code sequence.

4. The method of claim 1, wherein the at least one light source comprises at least two non-adjacent light sources.

5. The method of claim 1, wherein the first and second code sequences are orthogonal code sequences, preferably wherein the first and second orthogonal code sequences are transmitted by different light sources, of the at least one light source.

6. The method of claim 1, wherein the first coded light transmission and the second coded light transmission overlap in time, and preferably wherein the first coded light transmission is sent using light emitted at a first wavelength, and the second coded light transmission is sent using light emitted at a second wavelength different from the first wavelength.

7. The method of claim 1, wherein the first and second coded light transmissions span:

   a plurality of transmission opportunities, as a plurality of chips, along a time axis; or
   a plurality of transmission opportunities, as a plurality of wavelength bands, along a wavelength axis.

8. The method of claim 1, wherein the at least one light source comprises a at least one light emitting diode, LEDs, and wherein the at least one LED is further configured to provide a flash for image capture using an image sensor in the device.

9. The method of claim 8, wherein:

   the at least one LED comprises a plurality of LEDs configured to emit light of different wavelengths,
   when used to provide the flash for image capture, light of different wavelengths emitted from the plurality of LEDs combine to form white light, and
   when used to send the at least one coded light transmission, light of different wavelengths from the plurality of LEDs are pulsed separately or additively to generate the first and second coded light transmissions.

10. An apparatus (700) for performing range estimation comprising:

    an at least one light source (738, 750);
    an at least one sensor (735, 750);
    a memory (760);
    a processor (710, 720) communicatively coupled to the memory (760), the at least one sensor (735, 750), and the at least one light source (738, 750);
    wherein the processor (710, 720) is configured to:

    determine a first code sequence and a second code sequence, wherein the first code sequence is for a first target depth range and the second code sequence is for a second target depth range, wherein the first and second target depth ranges are different;
    cause the at least one light source (738, 750) to send the first and second code sequences as first and second coded light transmissions toward one or more targets, wherein the first and second code sequences are encoded as amplitude-based codes over time, or as wavelength-based codes over time, or as combinations thereof, in the first and second coded light transmission;
    cause a reflected version of the first coded light transmission to be received at the at least one sensor (735, 750) from the one or more targets during a first receive time window associated with a first range of roundtrip delays corresponding to the first target depth range, as a first reflected light signal;
    cause a reflected version of the second coded light transmission to be received at the at least one sensor (735, 750) from the one or more targets during a second receive time window associated with a second range of roundtrip delays corresponding to the second target depth range, as a second reflected light signal;
    correlate the first and second reflected light signals with the first and second code sequences, to generate first and second time-of-flight values for the first and second coded light transmissions; and
    generate first and second range estimates in the first and second target depth ranges for the first and second coded light transmissions based on the first and second time-of-flight values.

11. The apparatus (700) of claim 10, wherein the at least one light source (738, 750) comprises an at least one vertical-cavity surface-emitting laser, VCSEL, preferably wherein the at least one VCSEL is within a two-dimensional array of VCSELs.

12. The apparatus (700) of claim 10, wherein the reflected light signal is received using:

    an at least one complementary metal oxide semiconductor, CMOS, image sensor; or
    an at least one single-photon avalanche diode, SPAD, the at least one SPAD preferably being within a two-dimensional array of SPADs.

13. The apparatus (700) of claim 10, wherein the apparatus comprises:

    a mobile device; or
    a stationary device, for example a roadside unit, RSU, or an Internet-of-Things, IoT, device.

**14.** The apparatus (700) of claim 10, wherein the at least one light source (738, 750) and the at least one sensor are implemented:

> on a common semiconductor die; or
> on two or more semiconductor dies within a common integrated circuit package; or
> as two or more separate integrated circuit packages.

**15.** A non-transitory computer readable medium storing instructions to cause the apparatus of claim 10 to execute the steps of the method of claim 1.

**Patentansprüche**

**1.** Verfahren, auf einem Gerät (700), zum Durchführen von Entfernungsschätzung, das Folgendes beinhaltet:

> Bestimmen (610) einer ersten Codesequenz und einer zweiten Codesequenz, wobei die erste Codesequenz für einen ersten Zielentfernungsbereich und die zweite Codesequenz für einen zweiten Zielentfernungsbereich bestimmt ist, wobei der erste und zweite Zielentfernungsbereich unterschiedlich sind;
> Senden (620) der ersten und zweiten Codesequenz als erste und zweite codierte Lichtübertragung in Richtung eines oder mehrerer Ziele mittels mindestens einer Lichtquelle, wobei die erste und zweite Codesequenz als amplitudenbasierte Codes über die Zeit oder als wellenlängenbasierte Codes über die Zeit oder als Kombinationen davon in der ersten und zweiten codierten Lichtübertragung codiert sind;
> Empfangen (630), durch mindestens einen Empfänger, einer reflektierten Version der ersten codierten Lichtübertragung von den ein oder mehreren Zielen während eines ersten Empfangszeitfensters assoziiert mit einem ersten Bereich von Rundlaufverzögerungen entsprechend der dem ersten Zieltiefenbereich als erstes reflektiertes Lichtsignal;
> Empfangen (630), durch den mindestens einen Empfänger, einer reflektierten Version der zweiten codierten Lichtübertragung von den ein oder mehreren Zielen während eines zweiten Empfangszeitfensters assoziiert mit einem zweiten Bereich von Rundlaufverzögerungen entsprechend dem zweiten Zieltiefenbereich als zweites reflektiertes Lichtsignal;
> Verarbeiten (640) des ersten und zweiten reflektierten Lichtsignals durch Korrelieren des ersten und zweiten reflektierten Lichtsignals mit der ersten und zweiten Codesequenz, um einen ersten und zweiten Flugzeitwert für die erste und zweite codierte Lichtübertragung zu erzeugen; und
> Erzeugen (650) einer ersten und zweiten Entfernungsschätzung im ersten und zweiten Zieltiefenbereich für die erste und zweite codierte Lichtübertragung auf der Basis des ersten und zweiten Flugzeitwerts.

**2.** Verfahren nach Anspruch 1, wobei die mindestens eine Lichtquelle ein eindimensionales Array von Lichtquellen umfasst, wobei das eindimensionale Array von Lichtquellen vorzugsweise eine erste Lichtquelle, die die erste codierte Lichtübertragung auf der Basis der ersten Codesequenz emittiert, und eine zweite Lichtquelle umfasst, die die zweite codierte Lichtübertragung auf der Basis der zweiten Codesequenz orthogonal zur ersten Codesequenz emittiert.

**3.** Verfahren nach Anspruch 1, wobei die mindestens eine Lichtquelle ein zweidimensionales Array von Lichtquellen umfasst, wobei das zweidimensionale Array von Lichtquellen vorzugsweise eine erste Lichtquelle, die die erste codierte Lichtübertragung auf der Basis der ersten Codesequenz emittiert, und eine zweite Lichtquelle umfasst, die die zweite codierte Lichtübertragung auf der Basis der zweiten Codesequenz orthogonal zur ersten Codesequenz emittiert.

**4.** Verfahren nach Anspruch 1, wobei die mindestens eine Lichtquelle mindestens zwei nicht benachbarte Lichtquellen umfasst.

**5.** Verfahren nach Anspruch 1, wobei die erste und zweite Codesequenz orthogonale Codesequenzen sind, wobei vorzugsweise die erste und zweite orthogonale Codesequenz von unterschiedlichen Lichtquellen der mindestens einen Lichtquelle übertragen werden.

**6.** Verfahren nach Anspruch 1, wobei sich die erste codierte Lichtübertragung und die zweite codierte Lichtübertragung zeitlich überlappen, und wobei vorzugsweise die erste codierte Lichtübertragung mittels bei einer ersten Wellenlänge emittierten Lichts gesendet wird und die zweite codierte Lichtübertragung mittels bei einer sich von der ersten Wellenlänge unterscheidenden zweiten Wellenlänge emittierten Lichts gesendet wird.

7. Verfahren nach Anspruch 1, wobei die erste und zweite codierte Lichtübertragung sich erstrecken über:

mehrere Übertragungsgelegenheiten als mehrere Chips entlang einer Zeitachse; oder
mehrere Übertragungsgelegenheiten als mehrere Wellenlängenbänder entlang einer Wellenlängenachse.

8. Verfahren nach Anspruch 1,
wobei die mindestens eine Lichtquelle mindestens eine LED (Light Emitting Diode) umfasst, und wobei die mindestens eine LED ferner zum Erzeugen eines Blitzes für die Bildaufnahme mittels eines Bildsensors in dem Gerät konfiguriert ist.

9. Verfahren nach Anspruch 8, wobei:

die mindestens eine LED mehrere LEDs umfasst, die zum Emittieren von Licht unterschiedlicher Wellenlängen konfiguriert sind,
wobei bei Verwendung zum Erzeugen des Blitzes zur Bildaufnahme von den mehreren LEDs emittiertes Licht unterschiedlicher Wellenlängen sich zu weißem Licht kombiniert, und
wobei bei Verwendung zum Senden der mindestens einen codierten Lichtübertragung Licht unterschiedlicher Wellenlängen von den mehreren LEDs separat oder additiv gepulst wird, um die erste und zweite codierte Lichtübertragung zu erzeugen.

10. Vorrichtung (700) zur Durchführung von Entfernungsschätzung, die Folgendes umfasst:

mindestens eine Lichtquelle (738, 750);
mindestens einen Sensor (735, 750);
einen Speicher (760);
einen Prozessor (710, 720), der mit dem Speicher (760), dem mindestens einen Sensor (735, 750) und der mindestens einen Lichtquelle (738, 750) kommunikativ gekoppelt ist;
wobei der Prozessor (710, 720) konfiguriert ist zum:

Bestimmen einer ersten Codesequenz und einer zweiten Codesequenz, wobei die erste Codesequenz für einen ersten Zielentfernungsbereich und die zweite Codesequenz für einen zweiten Zielentfernungsbereich bestimmt ist, wobei der erste und zweite Zielentfernungsbereich unterschiedlich sind;
Veranlassen der mindestens einen Lichtquelle (738, 750) zum Senden (620) der ersten und zweiten Codesequenz als erste und zweite codierte Lichtübertragung in Richtung eines oder mehrerer Ziele, wobei die erste und zweite Codesequenz als amplitudenbasierte Codes über die Zeit oder als wellenlängenbasierte Codes über die Zeit oder als Kombinationen davon in der ersten und zweiten codierten Lichtübertragung codiert sind;
Veranlassen des Empfangs einer reflektierten Version der ersten codierten Lichtübertragung an dem mindestens einen Sensor (735, 750) von den ein oder mehreren Zielen während eines ersten Empfangszeitfensters assoziiert mit einem ersten Bereich von Rundlaufverzögerungen entsprechend dem ersten Zieltiefenbereich als erstes reflektiertes Lichtsignal;
Veranlassen des Empfangs einer reflektierten Version der zweiten codierten Lichtübertragung an dem mindestens einen Sensor (735, 750) von den ein oder mehreren Zielen während eines zweiten Empfangszeitfensters assoziiert mit einem zweiten Bereich von Rundlaufverzögerungen entsprechend dem zweiten Zieltiefenbereich als zweites reflektiertes Lichtsignal;
Korrelieren des ersten und zweiten reflektierten Lichtsignals mit der ersten und zweiten Codesequenz, um einen ersten und zweiten Flugzeitwert für die erste und zweite codierte Lichtübertragung zu erzeugen; und
Erzeugen einer ersten und zweiten Entfernungsschätzung im ersten und zweiten Zieltiefenbereich für die erste und zweite codierte Lichtübertragung auf der Basis des ersten und zweiten Flugzeitwerts.

11. Vorrichtung (700) nach Anspruch 10, wobei die mindestens eine Lichtquelle (738, 750) mindestens einen VCSEL (Vertical-Cavity Surface-Emitting Laser) umfasst, wobei der mindestens eine VCSEL vorzugsweise innerhalb eines zweidimensionalen Array von VCSELs angeordnet ist.

12. Vorrichtung (700) nach Anspruch 10, wobei das reflektierte Lichtsignal empfangen wird mittels:

mindestens eines CMOS-(Complementary Metal Oxide Semiconductor)-Bildsensors; oder
mindestens einer SPAD (Single-Photon Avalanche Diode), wobei die mindestens eine SPAD vorzugsweise innerhalb eines zweidimensionalen Array von SPADs angeordnet ist.

**13.** Vorrichtung (700) nach Anspruch 10, wobei die Vorrichtung Folgendes umfasst:

ein mobiles Gerät; oder
ein stationäres Gerät, beispielsweise eine RSU (Roadside Unit) oder ein IOT-(Internet-of-Things)-Gerät.

**14.** Vorrichtung (700) nach Anspruch 10, wobei die mindestens eine Lichtquelle (738, 750) und der mindestens eine Sensor implementiert sind:

auf einem gemeinsamen Halbleiterchip; oder
auf zwei oder mehr Halbleiterchips innerhalb eines gemeinsamen integrierten Schaltungspakets; oder
als zwei oder mehr separate integrierte Schaltungspakete.

**15.** Nichtflüchtiges, computerlesbares Medium, das Befehle speichert, um die Vorrichtung nach Anspruch 10 zum Ausführen der Schritte des Verfahrens nach Anspruch 1 zu veranlassen.

**Revendications**

**1.** Procédé, sur un dispositif (700), pour réaliser une estimation de distance, comprenant :

la détermination (610) d'une première séquence de code et d'une seconde séquence de code, dans lequel la première séquence de code se rapporte à une première plage de profondeur cible et la seconde séquence de code se rapporte à une seconde plage de profondeur cible, dans lequel les première de seconde plages de profondeur cibles sont différentes ;
l'envoi (620) des première et seconde séquences de code sous la forme de première et seconde transmissions de lumière codées vers une ou plusieurs cibles à l'aide d'au moins une source de lumière, dans lequel les première et seconde séquences de code sont encodées en tant que codes basés sur l'amplitude dans le temps, ou en tant que codes basés sur la longueur d'onde dans le temps, ou une combinaisons de ceux-ci, dans les première et seconde transmissions de lumière codées ;
la réception (630), par au moins un récepteur, durant une première fenêtre de temps de réception associée à une première plage de retards aller-retour correspondant à la première plage de profondeur cible, d'une version réfléchie de la première transmission de lumière codée à partir des une ou plusieurs cibles, sous forme de premier signal lumineux réfléchi ;
la réception (630), par l'au moins un récepteur, durant une seconde fenêtre de temps de réception associée à une seconde plage de délais aller-retour correspondant à la seconde plage de profondeur cible, d'une version réfléchie de la seconde transmission de lumière codée à partir d'une ou plusieurs cibles, sous forme de second signal lumineux réfléchi ;
le traitement (640) des premier et second signaux lumineux réfléchis en corrélant les premier et second signaux lumineux réfléchis avec première et seconde séquences de code, afin de générer des première et seconde valeur de temps de vol des première et seconde transmissions de lumière codées ; et
la génération (650) de première et seconde estimations de distance dans les première et seconde plages de profondeur cible pour les première et seconde transmissions de lumière codées, sur la base des première et seconde les valeurs de temps de vol.

**2.** Procédé selon la revendication 1, dans lequel l'au moins une source de lumière comprend un réseau unidimensionnel de sources de lumière, le réseau unidimensionnel de sources de lumière comprenant de préférence une première source de lumière émettant la première transmission de lumière codée sur la base de la première séquence de code, et une seconde source de lumière émettant la seconde transmission de lumière codée sur la base de la seconde séquence de codes orthogonale à la première séquence de codes.

**3.** Procédé selon la revendication 1, dans lequel l'au moins une source de lumière comprend un réseau bidimensionnel de sources de lumière, le réseau bidimensionnel de sources de lumière comprenant de préférence une première source de lumière émettant la première transmission de lumière codée sur la base de la première séquence de code, et une seconde source de lumière émettant la seconde transmission de lumière codée sur la base de la seconde séquence de code orthogonale à la première séquence de code.

4. Procédé selon la revendication 1, dans lequel l'au moins une source de lumière comprend au moins deux sources de lumière non adjacentes.

5. Procédé selon la revendication 1, dans lequel les première et seconde séquences de code sont des séquences de code orthogonales, de préférence dans lequel les première et seconde séquences orthogonales sont transmises par différentes sources de lumière, de l'au moins une source de lumière.

6. Procédé selon la revendication 1, dans lequel la première transmission de lumière codée et la seconde transmission de lumière codée se chevauchent dans le temps, et de préférence dans lequel la première transmission de lumière codée est envoyée à l'aide d'une lumière émise à une première longueur d'onde, et la seconde transmission de lumière codée est envoyée à l'aide d'une lumière émise à une seconde longueur d'onde différente de la première longueur d'onde.

7. Procédé selon la revendication 1, dans lequel les première et seconde transmissions de lumière codées couvrent :

   une pluralité d'opportunités de transmission, sous forme de pluralité de bribes, le long d'un axe temporel ; ou
   une pluralité d'opportunités de transmission, sous forme de bandes de longueurs d'onde, le long d'un axe de longueur d'onde.

8. Procédé selon la revendication 1, dans lequel l'au moins une source de lumière comprend au moins une diode électroluminescente, DEL, et dans lequel l'au moins une LED est configurée en outre pour fournir un flash de capture d'image à l'aide d'un capteur d'image dans le dispositif.

9. Procédé selon la revendication 8, dans lequel l'au moins une DEL comprend une pluralité de DEL configurées pour émettre une lumière de différentes longueurs d'onde,

   lorsqu'elle est utilisée pour fournir le flash de capture d'image, les lumières de différentes longueurs d'onde émises par la pluralité de DEL se combinent pour former une lumière blanche, et
   lorsqu'elle est utilisée pour envoyer l'au moins une transmission de lumière codée, les lumières de longueurs d'onde différentes provenant de la pluralité de DEL sont pulsées séparément ou de manière additive pour générer les première et seconde transmissions de lumière codée.

10. Appareil (700) d'estimation de distance comprenant :

    au moins une source de lumière (738 750) ;
    au moins un capteur (735, 750) ;
    une mémoire (760) ;
    un processeur (710, 720) couplé en communication à la mémoire (760), à l'au moins un capteur (735, 750) et à l'au moins une source de lumière (738, 750) ; dans lequel le processeur (710, 720) est configuré pour :

       déterminer une première séquence de code et une seconde séquence de code, dans lequel la première séquence de code se rapporte à une première plage de profondeur cible et la seconde séquence de code se rapporte à une seconde plage de profondeur cible, dans lequel les première et seconde plages de profondeur cibles sont différentes ;
       amener l'au moins une source de lumière (738, 750) à envoyer les première et seconde séquences de code sous la forme de première et seconde transmissions de lumière codées vers une ou plusieurs cibles, dans lequel les première et seconde séquences de code sont encodées en tant que codes basés sur l'amplitude dans le temps, ou en tant que codes basés sur la longueur d'onde dans le temps, ou une combinaisons de ceux-ci, dans les première et seconde transmissions de lumière codées ;
       faire en sorte qu'une version réfléchie de la première transmission de lumière codée soit reçue au niveau de l'au moins un capteur (735, 750) à partir des une ou plusieurs cibles, durant une première fenêtre de temps de réception associée à une première plage de retards aller-retour correspondant à la première plage de profondeur cible, sous forme de premier signal lumineux réfléchi ;
       faire en sorte qu'une version réfléchie de la seconde transmission de lumière codée soit reçue au niveau de l'au moins un capteur (735, 750) à partir des une ou plusieurs cibles, durant une seconde fenêtre de temps de réception associée à une seconde plage de retards aller-retour correspondant à la seconde plage de profondeur cible, sous forme de second signal lumineux réfléchi ;

corréler les premier et second signaux lumineux réfléchis avec les première et seconde séquences de code, afin de générer des première et seconde valeurs de temps de vol des première et seconde transmissions de lumière codées ; et

générer des première et seconde estimations de distance dans les première et seconde plages de profondeur cible pour les première et seconde transmissions de lumière codées, sur la base des première et seconde valeurs de temps de vol.

**11.** Appareil (700) selon la revendication 10, dans lequel l'au moins une source de lumière (738, 750) comprend au moins un laser à émission en surface à cavité verticale, VCSEL, de préférence dans lequel au moins un VCSEL se trouve dans un réseau bidimensionnel de VCSEL.

**12.** Appareil (700) selon la revendication 10, dans lequel le signal de lumière réfléchie est reçu en utilisant :

au moins un capteur d'image à semiconducteur métal-oxyde complémentaire (CMOS) ;
ou
au moins une diode à avalanche à photon unique, SPAD, l'au moins une SPAD se trouvant de préférence dans un réseau bidimensionnel de SPAD.

**13.** Appareil (700) selon la revendication 10, l'appareil comprenant :

un dispositif mobile ; ou
un dispositif fixe, par exemple une unité de bord de route, RSU, ou un dispositif de l'Internet des Objets, IoT.

**14.** Appareil (700) selon la revendication 10, dans lequel l'au moins une source de lumière (738, 750) et l'au moins un capteur sont implémentés :

sur une puce semi-conductrice commune ; ou
sur deux puces semi-conductrices ou plus au sein d'un boîtier de circuit intégré commun ; ou
sous forme de deux boîtiers de circuit intégré ou plus.

**15.** Support non transitoire lisible par ordinateur stockant des instructions pour amener l'appareil selon la revendication 10 à exécuter les étapes du procédé selon la revendication 1.

FIG. 1

FIG. 2A

FIG. 2B

EP 4 405 716 B1

300

| TX Optics | 302 |

| RX Optics | 304 |

320

Emitter(s)
(e.g. VCSEL
Array) — 322

Driver — 324

Code
Generator(s) — 326

Code Sequence(s) →

340

Sensor(s)
(e.g., SPAD
Array) — 342

Amplification
and Detection — 344

Correlator(s) — 346

Peak
Detector(s) — 348

Range
Computation and
Point Cloud
Formation — 350

Timing Controller — 360

Memory — 370

Processor — 380

Clock
Generator — 390

FIG. 3

400

signal
propagation

404

Encoded
Pulses

signal
propagation

402

Pulse

FIG. 4

Pulse

Encoded Pulses
(Wavelength $\omega_0$)

Encoded Pulses
(Wavelength $\omega_1$)

Encoded Pulses
(Wavelength $\omega_2$)

Encoded Pulses
(Wavelength $\omega_3$)

signal
propagation

signal
propagation

500

502

504

506

508

510

FIG. 5

600

610 — Determine an at least one code sequence

620 — Send the at least one code sequence as an at least one coded light transmission toward one or more targets using an at least one light source, wherein the at least one code sequence is encoded as an amplitude-based code over time, or as a wavelength-based code over time, or as a combination thereof, in the at least one coded light transmission

630 — Receive a reflected version of the at least one coded light transmission from the one or more targets, as a reflected light signal

640 — Process the reflected light signal by correlating the reflected light signal with the at least one code sequence, to generate a time-of-flight value for the at least one coded light transmission

650 — Generate a range estimate for the at least one light source based on the time-of-flight value

FIG. 6

FIG. 7

**EP 4 405 716 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190310370 A1
- US 20200284881 A1